# EUROPÄISCHE PATENTSCHRIFT

(11) **EP 3 361 150 B1**
(45) Veröffentlichungstag und Bekanntmachung des Hinweises auf die Patenterteilung: **19.06.2019**
(21) Anmeldenummer: 18020123.8
(22) Anmeldetag: 26.06.2014
(51) Int. Cl.: F21V 31/04, B29C 45/14, F21S 4/22, F21Y 115/10, F21Y 103/10, B29L 31/00, B29C 39/00

(54) **HORIZONTAL ODER VERTIKAL BIEGEELASTISCHE LEUCHTDIODEN-BÄNDER MIT HOMOGENEN LICHTAUSTRITT UND VERFAHREN ZU DEREN HERSTELLUNG**
HORIZONTALLY OR VERTICALLY FLEXIBLE LIGHT EMITTING DIODE STRIPS WITH HOMOGENEOUS LIGHT OUTPUT AND METHOD FOR THEIR PRODUCTION
BANDES DE DIODES LUMINESCENTES ÉLASTIQUES HORIZONTALES OU VERTICALES ÉQUIPÉES D'UNE SORTIE DE LUMIÈRE HOMOGÈNE ET LEUR PROCÉDÉ DE FABRICATION

(30) Priorität: 15.11.2013 DE 102013019037; 15.11.2013 DE 102013019039
(43) Veröffentlichungstag der Anmeldung: 15.08.2018
(62) Teilanmeldung aus: 14002184.1
(73) Patentinhaber: Josef Barthelme GmbH & Co. KG, 90491 Nürnberg (DE)
(72) Erfinder: Barthelme, Nicola, 90425 Nürnberg (DE); Eistetter, Stefan, 90425 Nürnberg (DE); Astrup, Hans, 91301 Forchheim (DE)
(74) Vertreter: Dreykorn-Lindner, Werner

(56) Entgegenhaltungen:
- EP-A2- 2 241 797
- CN-U- 202 791 560
- DE-A1-102011 075 531
- DE-U1-202009 002 127

## Beschreibung

Die Erfindung betrifft, gemäß dem Oberbegriff des Patentanspruchs 1 oder 2 jeweils ein Leuchtdiodenband mit einem U-förmigen Gehäuse mit zwei Schenkeln und einer Basis, mit auf einem flexiblen Leitungsträger montierten Chip-Leuchtdioden und mit zwei zwischen den beiden Schenkeln des Gehäuses angeordneten Vergußmassen. Weiterhin betrifft die Erfindung, gemäß Patentanspruch 14 und 15, jeweils ein Verfahren zu dessen Herstellung.

Leuchtdiodenbänder sind seit langem bekannt. Beispielsweise ist aus der DE 20 2009 002127 U1 eine LED-Leuchte, umfassend ein Gehäuse, d.h. eine U-förmige Gussform, welche mehrere, auf einem bandförmigen, insbesondere flexiblen Leitungsträger beabstandet zueinander angeordnete Chip-Leuchtdioden umgibt, bekannt. Die U-förmige Gussform, d.h. bei der DE 20 2009 002127 U1 als Gehäuseunterteil mit einen U-förmigen Querschnitt bezeichnet, weist also den auf dem inneren Bodenbereich aufliegend angeordneten Leitungsträger (LED-Leiste) auf. Um den Punkteffekt bei der visuellen Wahrnehmung der Leuchte zu verhindern und diese im Feuchtraumbereich oder auch im Außenbereich einsetzen zu können, weisen die zwei einander in einem Abstand gegenüberliegenden Wandschenkel jeweils ein oberes Ende auf, welches von innen nach außen verjüngend ausgebildet ist und wobei der innere Querschnitt des Gehäuseunterteils zumindest teilweise mit wenigstens einer ersten, transparenten Vergussmasse bis zum Beginn der Verjüngung und ab der Verjüngung mit einer zweiten, opaken Vergussmasse gefüllt ist, die einen Gehäusedeckel ausbildet. Aufgrund der oberen Begrenzung an den Enden der seitlichen Wandschenkel ist hier unter Berücksichtigung der Oberflächenspannung dieser Vergussmasse die Menge der Vergussmasse beim Befüllen derart bemessen, dass sich in der U-förmigen Gussform eine plane, ebene Oberfläche oder konvexe bzw. konkave Oberfläche der opaken zweiten Vergussmasse ergibt. Demnach kann das von den Leuchtdioden emittierte Licht zunächst durch den transparenten Bereich der ersten Vergussmasse ungehindert bis zur Unterseite der zweiten Vergussmasse gelangen, wo es in diese eindringt und aufgrund der Opazität, beispielsweise hervorgerufen durch Streupartikel in der Masse, stark gestreut wird und somit an der Oberfläche der zweiten Vergussmasse ein gleichmäßiges leuchtendes Erscheinungsbild, insbesondere ähnlich einer Neonleuchte, wenn bei einer Ausführungsform die U-förmige Gussform aus einem opaken, insbesondere durchpigmentierten Material besteht, erzielt wird. Die horizontal in Erstreckungsrichtung verlaufende Trennlinie zwischen der ersten Vergussmasse und der zweiten Vergussmasse liegt am Beginn der Verjüngung, wobei die erste Vergussmasse nach dem Aushärten den Boden der u-förmigen Vergussform für die zweite Vergussmasse bildet. Durch die Befüllung der offenen U-förmigen Gussform mit erster und zweiter Vergussmasse besteht beim Aushärten der jeweiligen Vergussmasse die Gefahr von äußeren Einzügen durch Schrumpfen (wobei zur Schwundkompensation Vergussmasse nachgefüllt werden könnte) und beim zu schnellen Eingießen in die Gussform besteht die Gefahr von Lufteinschlüssen, dies in Abhängigkeit der Viskosität.

Weitere Beispiele für einen 2-Schichtaufbau sind bekannt; siehe DE 60 2004 004 350 T2, diese zeigt zwei transparente Substratabschnitte sowie einen davor angeordneten Lichtstreuungskörper, oder DE 10 2009 054 474 A1, diese zeigt eine erste Vergussmasse (beispielsweise aus Hotmelt mit farbigen Füllstoffen) und eine die Lichtaustrittsfläche abdeckende, lichtdurchlässige (transparent oder transluzent (opak)) zweite Vergussmasse (beispielsweise aus Hotmelt), wobei ein Kühlkörper zumindest teilweise mit der zweiten Vergussmasse umgossen ist, oder DE 20 2012 009416 U1, diese zeigt einen u-förmigen Träger für das spätere Einfüllen zweier Vergussmassen (gleiches oder unterschiedliches Basismaterial z.B. Silikon mit gleichen oderunterschiedlichen Füllstoffen, wobei die untere blickdicht und die obere zur Homogenisierung des abgestrahlten Lichts transluzent ist) und eine bandförmige flexible Leiterplatte, wodurch eine insgesamt elastisch verformbare Leuchtvorrichtung bereitgestellt werden kann.

Eine technische Alternative zum dem aus der DE 20 2009 002 127 U1 bereits bekannten LED-Band, mit welcher das bislang nicht mögliche Biegen um eine Hochachse (z-Richtung) des LED-Bandes verwirklicht werden soll, ist aus der DE 10 2012 110136 A1 bekannt, welche gegenüber der Priorität nachveröffentlicht ist. Das LED-Band weist eine Vielzahl von Leuchtdioden auf, die in einer Reihe angeordnet sind und in einem flexiblen langgestreckten Gehäuse eingegossen sind. Das Gehäuse bildet eine, insbesondere U-förmige oder V-förmige, Gussform aus, die zwei sich nach oben (z-Richtung) erstreckende Seitenwandungen umfasst, d.h. mit zwei sich nach oben zur offenen Seite der Gussform erstreckenden Seitenwandungen, die in einem unteren Bereich, insbesondere durch einen Boden, miteinander verbunden sind. Die Leuchtdioden werden in die Gussform eingebracht; die Gussform wird anschließend mit Vergussmasse befüllt. Von unten nach oben (in z-Richtung) betrachtet, wird die Gussform bis zu einer Markierung, d.h. eine durch zumindest eine an einer Seitenwandung horizontal verlaufende Markierungskante, wobei der unmittelbar oberhalb der Markierungskante anschließende Wandabschnitt der Seitenwandung vertikal ausgerichtet ist oder weiter als die Markierungskante in den Innenraum (der Gussform) hineinragt (auch zur Ausbildung eines zumindest teilweise "unstetigen" Übergangs von einem oberen Wandabschnitt zu einem unteren Wandabschnitt der Seitenwandung), mit einer ersten Vergussmasse befüllt. Ab der Markierung ist die Gussform mit einer zweiten Vergussmasse befüllt. Dabei können auch weitere Vergußmassen oberhalb bzw. unterhalb der Markierung angeordnet sein. An der Markierung bildet sich eine horizontale Grenzlinie zwischen erster und zweiter Vergussmasse aus, wobei die erste Vergußmasse nach dem Aushärten den Boden der Vergussform für die zweite Vergußmasse bildet. Die erste Vergußmasse ist insbesondere eine transparente Vergussmasse; die zweite Vergussmasse ist insbesondere eine opake Vergussmasse. Als Vergussmassen eigenen sich grundsätzlich Polyurethan(PU)-Werkstoffe. Insbesondere ist nun die Markierung durch zumindest eine an einer der Seitenwandungen, insbesondere an beiden der Seitenwandungen, horizontal verlaufende Markierungskante gebildet. Der sich unmittelbar oberhalb der Markierungskante anschließende Wandabschnitt der Seitenwandung ist vertikal ausgerichtet oder ragt weiter als die Markierungskante in den Innenraum hinein. Dabei kann der unmittelbar oberhalb der Markierungskante anschließender Wandabschnitt der Seitenwandung weiter in den Innenraum der Gussform hineinragen als ein unmittelbar unterhalb der Markierungskante anschließender Abschnitt der Seitenwandung. Die Seitenwandung ist zwingend einstückig und eine gute Einstellbarkeit tritt insbesondere dann ein, wenn an beiden Seitenwandungen eine horizontal verlaufende Markierungskante angeordnet ist, wobei beide Markierungskanten auf der gleichen vertikalen Position (z-Richtung) angeordnet sind. In einer bevorzugten Ausgestaltung eines LED-Bandes, sind benachbarte Leuchtdioden in drei Freiheitsgraden gelenkig miteinander verbunden. Hierzu sind die benachbarten Leuchtdioden ausschließlich durch freiliegende Kabelleitungen miteinander verbunden und sind nicht auf einem Leitungsband oder auf einer bandförmigen Platine befestigt. Es ist ersichtlich, dass die freiliegenden Kabelleitungen für sich genommen Drehungen und Biegungen in allen Richtungen erlauben. Freiliegend bedeutet dabei, dass diese Kabelleitung (=Litze + Isolation der Litze) vor dem Eingießen von keinem Material umschlossen waren; nach dem Eingießen können die freiliegenden Kabel aber durch die Vergußmasse umschlossen sein. Ein Kabel kann mehrere Kabelleitungen umfassen.

Wie die vorstehende Würdigung des Standes der Technik aufzeigt, sind unterschiedlich ausgestaltete flexible LED-Ketten/LED-Leisten bekannt, welche in der Regel nur in eine Richtung biegbar sind und ebenfalls nur in eine Richtung leuchten. Jedoch fehlt in der Praxis eine flexible LED-Kette/LED-Leiste für den Innen-, Außen- sowie Unterwasserbereich mit einer Schutzart von bis zu IP68, welche einen homogenen Lichtaustritt von über 180° (seitliche Abstrahlung), eine verbesserte Lichtausbeute und eine effektive Wärmeabfuhr hat. Besonders bedeutsam ist dies, weil die Beleuchtungsmittel herstellende Industrie als fortschrittliche, entwicklungsfreudige Industrie anzusehen ist, die schnell Verbesserungen und Vereinfachungen aufgreift und in die Tat umsetzt.

Der Erfindung liegt gegenüber den bekannten Leuchtdiodenbändern die Aufgabe zugrunde, diese derart weiterzuentwickeln, dass dem Benutzer ein flexibles, d.h. biegbares Leuchtdiodenband zur Verfügung gestellt wird, welches einen Abstrahlwinkel über 180° mit einem homogenen Lichtaustritt, eine verbesserte Lichtausbeute und eine effektive Wärmeabfuhr aufweist und baukastenartig aufgebaut werden kann.

Diese Aufgabe wird, gemäß kennzeichnenden Teil des Patentanspruchs 1, dadurch gelöst, dass mindestens der erste Schenkel des U-förmigen Gehäuses aus transluzenter, in der Wandstärke sich verjüngender und in das Kunststoffmaterial des Gehäuses übergehenden zweiten Vergussmasse besteht, dass an diesem Schenkel der flexible angeordnet und in der ersten transparenten Vergussmasse eingebettet ist und dass das Licht der Chip-Leuchtdioden von den Innenflächen des Gehäuses reflektiert und durch die zweite Vergussmasse diffus abgestrahlt wird, wobei das Leuchtdiodenband in Erstreckungsrichtung biegeelastisch ist..

Weiterhin wird diese Aufgabe, gemäß kennzeichnenden Teil des Patentanspruchs 2, dadurch gelöst, dass das Leuchtdiodenband mindestens zwei an den Schenkeln angeformte Reflektoren, welche das Licht der an der Basis des Gehäuses angeordneten Chip-Leuchtdioden reflektieren, aufweist, und dass die zweite Vergussmasse, welche transluzent ist, an der Stirnseite der beiden Schenkeln eine dreiteilige Kappe derart ausbildet, dass die zwei auf der Stirnseite der Schenkel angeordnete Kappenteile den Füllrand für das Einfüllen der ersten Vergussmasse, welche transparent ist, zwischen die Reflektoren bilden und danach die eingefüllte zweite Vergussmasse als drittes Kappenteil den Deckel schließt, wobei das Leuchtdiodenband in Erstreckungsrichtung biegeelastisch ist.

Die erfindungsgemäßen Leuchtdiodenbänder weisen die Vorteile auf, dass diese beispielsweise an Fassaden montiert werden können, um Konturen flexibel Nachzuzeichnen (vertikal biegbar) und homogen zu leuchten, dass diese durch die neuartigen Kühleigenschaften eine deutlich längere Lebensdauer haben und dass diese baukastenartig aus Deckel (Lichtaustritt) und U-förmiges Gehäuse zusammengesetzt werden können. Da die LED schon heute effizienter ist als die Leuchtstofflampe kann hier in der Fassadenbeleuchtung ebenfalls sehr viel Energie zukünftig eingespart werden. Weiterhin können Neonschriftzüge ersetzt werden, da die erfindungsgemäßen Leuchtdiodenbänder deutlich effizienter sind und die Lichtaustrittsfläche beliebige Formen mit einer qualitativ hochwertigen Oberfläche annehmen kann. Insbesondere weisen die erfindungsgemäßen Leuchtdiodenbänder die Vorteile einer gleichmäßigen (d.h. ohne verjüngende Kanten) transluzenten Deckschicht, welche das Licht im bis über 180°-Winkel abstrahlt (seitliche Abstrahlung) und einer optimalen Wärmeabführung (Chip-Leuchtdioden) auf.

Weiterhin wird diese Aufgabe, bei einem Verfahren zur Herstellung eines Leuchtdiodenbands nach Anspruch 2, gemäß Patentanspruch 14, gelöst, bei dem:
a) eine zweite Vergussmasse, welche flüssig und transluzent ist, in eine nach einer Seite hin offenen Vergussform, deren Konturenverlauf als sich von dieser Seite senkrecht erstreckende Schenkel und einer zur offenen Stirnseite sich erhebenden trapezförmigen Leiste ausgestaltet ist, zwischen den Schenkeln und der Schrägfläche der Leiste der Vergussform eingefüllt wird,
b) dass bis zum Füllrand der Vergussform das Kunststoffmaterial des Gehäuses derart eingefüllt wird, dass die beiden Schenkel mit angeformten Reflektoren und die Basis des U-förmigen Gehäuses ausgestaltet werden, wobei die Reflektoren das Licht der an der Basis angeordneten Chip-Leuchtdioden reflektieren,
c) der flexible Leitungsträger mit den montierten Chip-Leuchtdioden in das U-förmige Gehäuse auf der Basis angeordnet wird,
d) die erste Vergussmasse, welche transparent ist, zwischen die Reflektoren eingefüllt wird und
e) die zweite Vergussmassezwischen die zwei auf der Stirnseite der Schenkel angeordneten Kappenteile eingefüllt wird, wodurch diese als drittes Kappenteil den Deckel schließt.

Schließlich wird diese Aufgabe, bei einem Verfahren zur Herstellung eines Leuchtdiodenbands nach Anspruch 1, gemäß Patentanspruch 15, gelöst, bei dem:
a) eine zweite flüssige transluzente Vergussmasse in eine nach einer Seite hin offenen Vergussform, deren Konturenverlauf als sich von dieser Seite senkrecht erstreckende Schenkel und einem zur offenen Stirnseite sich erhebenden Füllrand ausgestaltet ist, derart eingefüllt wird, dass diese zwischen dem Füllrand und einer Überlaufkante der Vergussform eine gekrümmte Oberfläche ausbildet,
b) das Kunststoffmaterial des Gehäuses bis zur Überlaufkante der Vergussform eingefüllt wird und dabei den ersten Schenkel und die Basis des U-förmigen Gehäuses ausbildet,
c) der flexible Leitungsträger mit den montierten Chip-Leuchtdioden in das U-förmige Gehäuse unterhalb einer an das Ende der zweiten Vergussmasse angrenzende Nut des ersten Schenkels eingelegt wird,
d) die erste Vergussmasse bis zum inneren Rand der Basis und dem gegenüberliegenden Rand der zweiten Vergussmasse eingefüllt wird und
e) der zweite Schenkel des U-förmigen Gehäuses bis zum äußeren Rand der Basis und dem gegenüberliegenden Rand der zweiten Vergussmasse eingefüllt wird.

Dadurch, dass beim erfindungsgemäßen Verfahren gemäß Patentanspruch 14 die transluzente, seitlich abstrahlende Schicht (zweite Vergussmasse) zumindest teilweise oder beim erfindungsgemäßen Verfahren gemäß Patentanspruch 15 die transluzente Schicht (zweite Vergussmasse) als erstes gegossen wird, ist die lichtemittierende Schicht an der Oberfläche matt und nicht hochglänzend ausgeprägt, wie es beim Stand der Technik, beispielsweise der DE 20 2009 002127 U1, der Fall ist. Zudem besteht beim Aushärten der zweiten Vergussmasse kaum die Gefahr von Einzügen auf der Oberfläche durch Schrumpfen. Weiterhin kann die Lichtaustrittsfläche beliebige Formen annehmen, da diese zuerst gegossen wird und das baukastenartige Zusammensetzen des erfindungsgemäßen Leuchtdiodenbands aus Deckel (Lichtaustritt) und U-förmigen Gehäuse ermöglicht auf überraschend einfache Art und Weise die einzelnen Teile entsprechend der gewünschten Funktion (Wärmeleitung, Pigmentierung, Profilierung, Lichtaustritt) auszugestalten. Somit ist keine Zulieferung eines U-förmigen Gehäuses, wie beim Gegenstand der DE 20 2009 002127 U1, erforderlich und die erfindungsgemäßen Leuchtdiodenbänder können automatisch unter erhöhter Fertigungskontrolle (Reinraum) produziert werden, wobei auch konvexe oder konkave Oberflächen der Teile des Leuchtdiodenbands mit größer als 3mm gegenüber der Horizontalen ohne weiteres möglich sind.

Bei einer bevorzugten Ausgestaltung der Erfindung sind, gemäß Patentanspruch 3, Schenkel und Reflektoren einstückig und die Reflektoren sind jeweils als Schrägfläche in offener V-förmiger Anordnung zueinander ausgestaltet.

Diese Ausgestaltung der Erfindung weist den Vorteil auf, dass durch die Einstückigkeit und durch die Doppelfunktion der Reflektoren (Füllraum für die erste Vergussmasse, welche transparent ist und verbesserte Lichtausbeute) sehr kleine Wärmeübergangswiderstände vorliegen und trotz eines dicht schließenden Gehäuses (erste und zweite Vergussmasse) eine effektive Wärmeabfuhr gewährleistet ist.

Bei einer bevorzugten Ausgestaltung der Erfindung weist, gemäß Patentanspruch 9, der erste Schenkel eine an das Ende der zweiten Vergußmasse angrenzende Nut auf.

Diese Ausgestaltung der Erfindung weist den Vorteil auf, dass die Position des Übergangs, die Wandstärke im Bereich des Übergangs und dessen Verlauf definiert eingestellt werden kann.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- FIG. 1: eine erste Ausführungsform des Leuchtdiodenbands gemäß der Erfindung,
- FIG. 2: den ersten Verfahrensschritt, nämlich das Gießen der transluzenten, seitlich abstrahlenden Schicht (zweite Vergussmasse),
- FIG. 3: den zweiten Verfahrensschritt, nämlich das Gießen des U-förmigen Gehäuses mit Reflektoren,
- FIG. 4: das U-förmige Gehäuse nach dem Entformen,
- FIG. 5: den dritten Verfahrensschritt, nämlich das Einkleben des LED-Moduls/Leitungsträgers mit Klebeband an der Basis des Gehäuses,
- FIG. 6: den vierten Verfahrensschritt, nämlich das Gießen der ersten transparenten Vergussmasse bis zur Reflektorhöhe,
- FIG. 7: die Vergussform zum Leuchtdiodenband nach FIG. 1 im Schnitt,
- FIG. 8: eine zweite Ausführungsform einer Vergussform im Schnitt und
- FIG. 9: das Leuchtdiodenband gemäß der Vergussform nach FIG. 9,
- FIG. 10: für eine dritte Ausführungsform des Leuchtdiodenbands gemäß der Erfindung die erfindungsgemäße Vergussform mit Nut im Schnitt,
- FIG. 11: den ersten Verfahrensschritt, nämlich das Gießen der transluzenten, seitlich abstrahlenden Schicht (zweite Vergussmasse), welche sich entsprechend dem Kapillareffekt in der Wandstärke verjüngt,
- FIG. 12: den zweiten Verfahrensschritt, nämlich das Gießen des ersten Schenkels des U-förmigen Gehäuses aus Kunststoffmaterial, welches verjüngend in die zweite Vergussmasse übergeht,
- FIG. 13: das u-förmige Gehäuse nach dem Entformen,
- FIG. 14: den dritten Verfahrensschritt, nämlich das Einkleben des LED-Moduls/Leitungsträgers mit Klebeband am Schenkel des Gehäuses,
- FIG. 15: den vierten Verfahrensschritt, nämlich das Gießen der ersten transparenten Vergussmasse bis zum inneren Rand der Basis und dem gegenüberliegenden Rand der zweiten Vergußmasse,
- FIG. 16: den fünften Verfahrensschritt, nämlich das Gießen des zweiten Schenkels des U-förmigen Gehäuses aus Kunststoffmaterial als Reflektionsfläche, zur dritten Ausführungsform des Leuchtdiodenband gemäß der Erfindung,
- FIG. 17: eine vierte Ausführungsform einer Vergussform im Schnitt und
- FIG. 18: die vierte Ausführungsform des Leuchtdiodenbands nach FIG. 17,
- FIG. 19: eine fünfte Ausführungsform einer Vergussform im Schnitt und
- FIG. 20: die fünfte Ausführungsform des Leuchtdiodenbands nach FIG. 19,
- FIG. 21: im Detail eine Struktur an der Lichtaustrittsfläche (zweite Vergussmasse),
- FIG. 22: im Detail die Struktur in Form von Schrift,
- FIG. 23: im Detail die Struktur in Form von geometrischen Linien,
- FIG. 24: die Ausgestaltung der Form des Lichtaustritts (Deckel bzw. zweite Vergußmasse) in Dreiecksform und
- FIG. 25: das Leuchtdiodenband nach FIG. 24,
- FIG. 26: die Ausgestaltung der Form des Lichtaustritts (Deckel bzw. zweite Vergussmasse) als halbrunde 90° mit Hinterschnitt und
- FIG. 27: das Leuchtdiodenband nach FIG. 26,
- FIG. 28: die Ausgestaltung der Form des Lichtaustritts (Deckel bzw. zweite Vergußmasse) als rechteckige/quadratische 270° und
- FIG. 29: das Leuchtdiodenband nach FIG. 28,
- FIG. 30: die Ausgestaltung der Form des Lichtaustritts (Deckel bzw. zweite Vergußmasse) als Linse mit leichtem Hinterschnitt und
- FIG. 31: das Leuchtdiodenband nach FIG. 30,
- FIG. 32: die Ausgestaltung der Form des Lichtaustritts (Deckel bzw. zweite Vergussmasse) als rechteckige mit verbreiterter Abstrahlung und
- FIG. 33: das Leuchtdiodenband nach FIG. 32,
- FIG. 34: im Detail die Form für ein Leuchtdiodenband mit weißem Schenkel gerade auslaufend und transluzenten Schenkel mit Stufe,
- FIG. 35: im Detail die Form für ein Leuchtdiodenband mit weißem Schenkel gerade auslaufend und transluzenten Schenkel verjüngend,
- FIG. 36: im Detail die Form für ein Leuchtdiodenband mit weißem und transluzenten Schenkel mit Stufe,
- FIG. 37: im Detail die Form für ein Leuchtdiodenband mit weißem und transluzenten Schenkel gerade auslaufend,
- FIG. 38: im Detail die Form für ein Leuchtdiodenband mit weißem und transluzenten Schenkel mit Dreiecksform zum Ende hin,
- FIG. 39: im Detail die Form für ein Leuchtdiodenband mit weißem und transluzenten Schenkel mit rechteckigem Überstand,
- FIG. 40: im Detail die Form für ein Leuchtdiodenband mit angestelltem Boden, welcher das Licht reflektiert und mit einem Schenkel gerade und stumpf, und einem Schenkel verjüngend,
- FIG. 41: im Detail die Form für ein Leuchtdiodenband mit angestelltem Boden, welcher das Licht reflektiert und mit einem komplett als Reflektor ausgeformten Schenkel gerade und stumpf, und einem Schenkel verjüngend und
- FIG. 42: im Detail die Form für ein Leuchtdiodenband mit angestelltem Boden, welcher das Licht reflektiert und mit einem gerade und stumpfen Schenkel, und dem anderen Schenkel verjüngend.

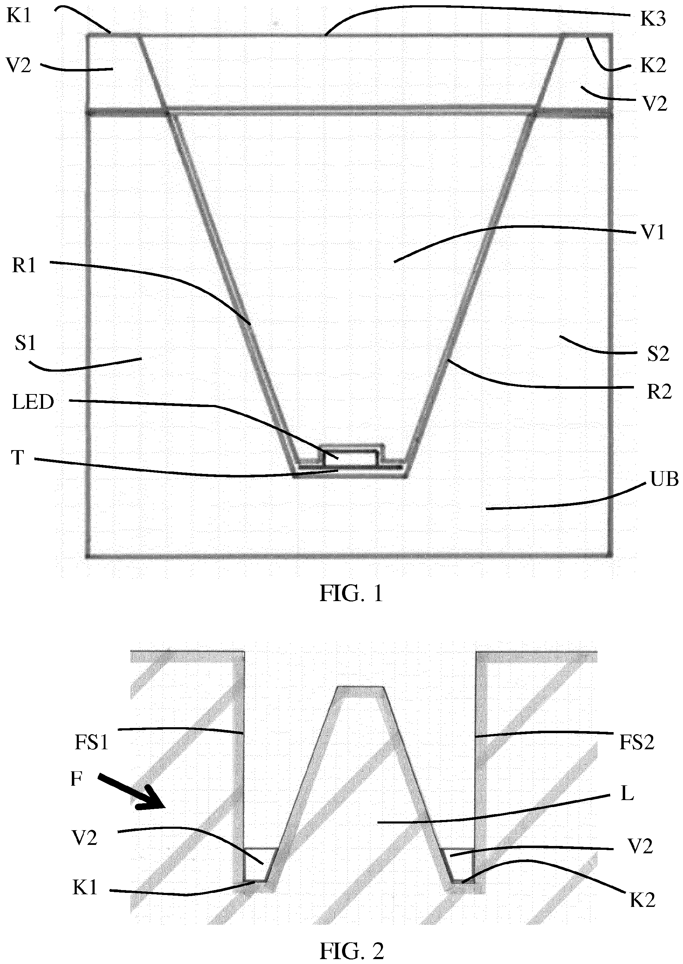

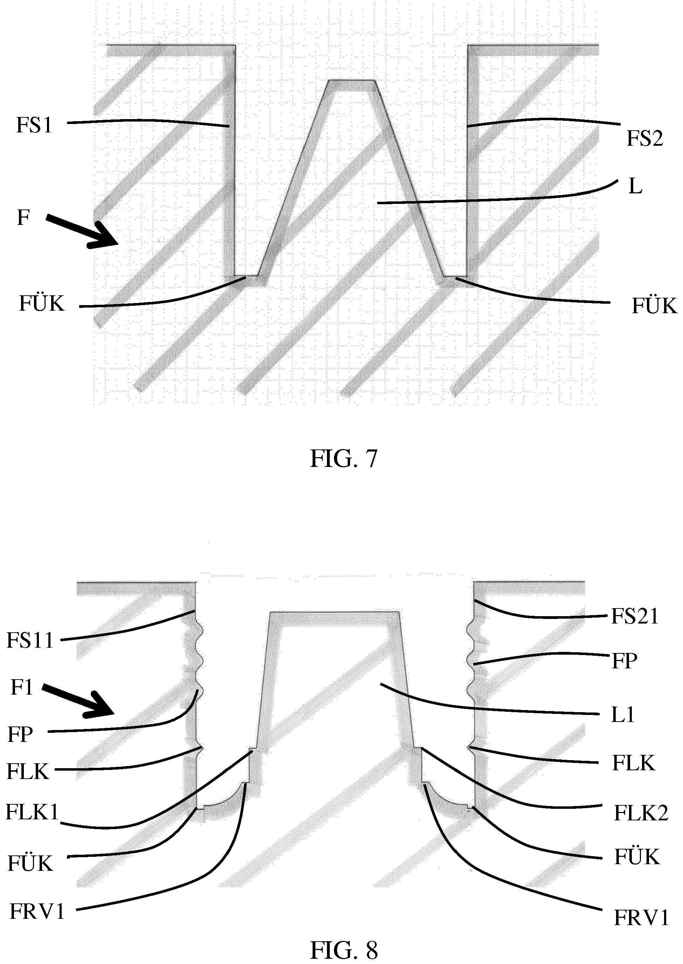

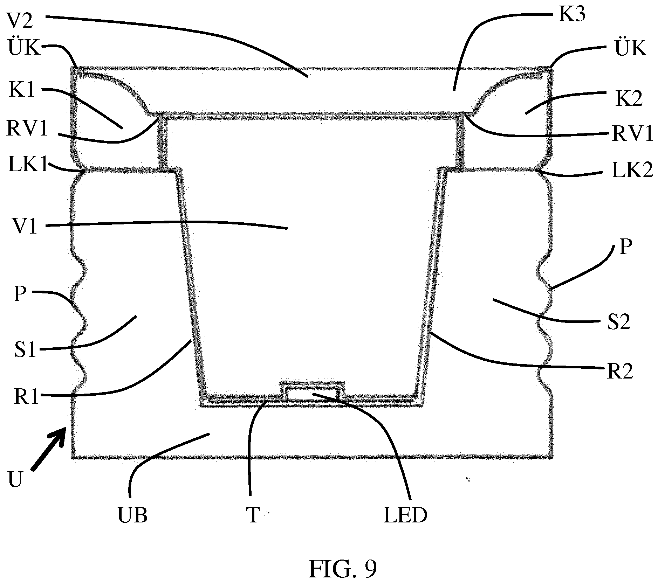

FIG. 1 zeigt eine erste Ausführungsform des Leuchtdiodenbands gemäß der Erfindung, Fig. 7 die erfindungsgemäße Vergussform im Schnitt und FIG. 2 bis FIG. 6 die einzelnen aufeinanderfolgenden Verfahrensschritte/Aufbau des erfindungsgemäßen Leuchtdiodenbands nach FIG. 1. FIG. 8 zeigt eine zweite Ausführungsform einer Vergussform im Schnitt zur Herstellung der in FIG. 9 dargestellten zweiten Ausführungsform des Leuchtdiodenbands gemäß der Erfindung.

FIG. 1 zeigt eine erste Ausführungsform des Leuchtdiodenband gemäß der Erfindung mit einem U-förmigen Gehäuse U, mit auf einem vertikal zur Erstreckungsrichtung flexiblen Leitungsträger T montierten Chip-Leuchtdioden LED und mit zwei in Abstrahlrichtung der Chip-Leuchtdioden LED übereinander und zwischen den beiden Schenkeln S1, S2 des Gehäuses U angeordneten Vergussmasse V1. Im Einzelnen weist das Leuchtdiodenband mindestens zwei an den Schenkeln S1, S2 angeordnete Reflektoren R1, R2 auf, welche das Licht der an der Basis UB eines u-förmigen Gehäuses U angeordneten Chip-Leuchtdioden LED reflektieren. Vorzugsweise bildet die zweite Vergussmasse V2, welche transluzent ist, an der Stirnseite der beiden Schenkeln S1, S2 eine dreiteilige Kappe K1, K2, K3 aus. Dabei bilden die zwei auf der Stirnseite der Schenkel S1, S2 angeordnete Kappenteile K1, K2 (mit stumpfen Ende dargestellt, jedoch ist im Rahmen der Erfindung jede Form/Profilierung der Lichtaustrittsfläche möglich) den Füllrand für das Einfüllen der ersten Vergussmasse V1, welche transparent ist, zwischen die Reflektoren R1, R2. Danach schließt die eingefüllte zweite Vergussmasse V2 als drittes Kappenteil K3 den Deckel.

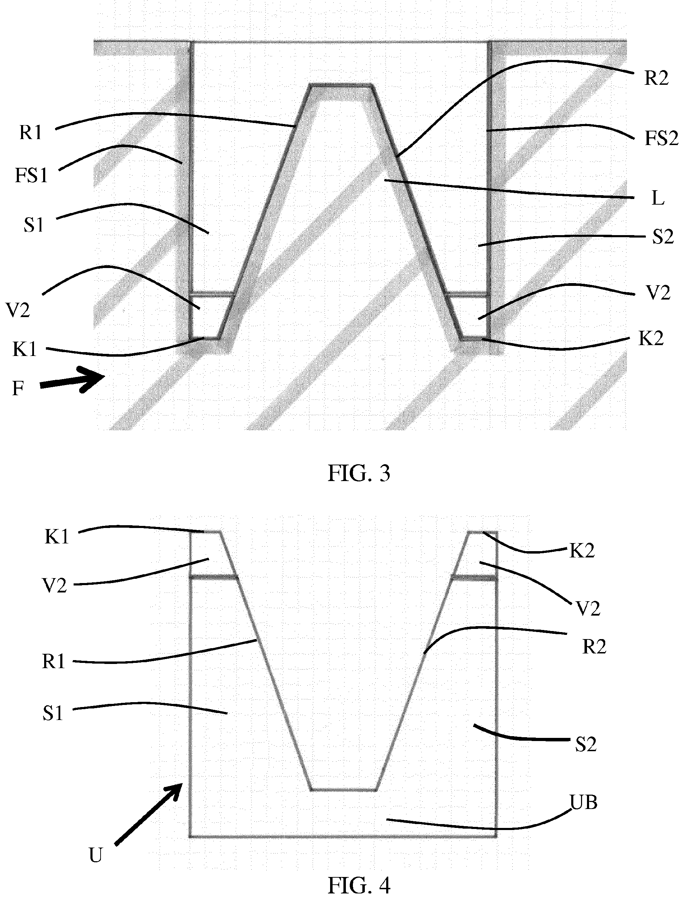

Wie FIG. 1 und beispielsweise FIG. 3 zeigen, sind Schenkel S1, S2 und Reflektoren R1, R2 einstückig, wobei die Reflektoren R1, R2 jeweils als Schrägfläche in offener V-förmiger Anordnung zueinander ausgestaltet sind.

In Fig. 7 ist die erfindungsgemäße Vergussform F im Schnitt dargestellt, welche nach einer Seite hin offen ist. Vorzugsweise ist der Konturenverlauf als sich von dieser Seite senkrecht erstreckende Schenkel FS1, FS2 und einer zur offenen Stirnseite sich erhebenden trapezförmigen Leiste L ausgestaltet.

Insbesondere ist das Kunststoffmaterial des Gehäuses U mit wärmeleitenden Füllstoffen, beispielsweise Keramik-Füllstoffen angereichert und dadurch wärmeleitend. In vorteilhafter Weise ist der Leitungsträger T wärmeleitend und mit Klebeband an der Basis UB des Gehäuses U angeklebt. Ein wärmeleitendes Klebeband übernimmt hier eine Doppelfunktion, nämlich Positionierung des Leitungsträgers T vor dem Vergießen und Verbesserung der Wärmeableiteigenschaften, so dass Wärmestaus vermieden sind. Gleiches gilt für den Leitungsträger T, nämlich Positionierung der LED's und Wärmeleitung einschließlich Vergrößerung der Oberfläche (Wärmestrahlung). Die Ausbreitung von Wärme erfolgt nämlich durch Wärmestrahlung, Wärmeleitung und Wärmeströmung (Konvektion). Wärmestrahlung ermöglicht auch die Abgabe von Wärme in das Vakuum, sie ist nur von der Temperatur des strahlenden Körpers abhängig und unabhängig von der Temperatur der Umgebung. Die Wärmestrahlung hängt von der Temperatur des Strahlers/Körpers und auch von der Beschaffenheit seiner Oberfläche ab. Wärmestrahlung erfolgt im Gegensatz zur Wärmeleitung auch dann, wenn der Körper die gleiche Temperatur wie seine Umgebung hat. Wie viel ein Körper abstrahlt, ist unabhängig von der Temperatur seiner Umgebung und der Körper erhält immer Strahlung von seiner Umgebung, selbst wenn diese kälter ist. Allerdings strahlt dann die Umgebung dem Körper weniger zu als umgekehrt und der Körper kühlt sich ab. Die Wärmeleitung erfolgt nur in der Materie, d.h. im Körper, und setzt in ihm ein Temperaturgefälle voraus. Wenn man einem Körper nicht an einer Stelle dauernd Wärme zuführt oder entnimmt, so gleichen sich alle Temperaturunterschiede in ihm mit der Zeit aus, und zwar durch einen Wärmestrom, der von höherer zu tieferer Temperatur fließt. Metalle sind relativ gute Wärmeleiter, beispielsweise Kupfer mit einer Wärmeleitfähigkeit von 0,93 cal/cm · s · k im Temperaturbereich zwischen 0° C und 100° C oder Aluminium mit einer Wärmeleitfähigkeit von 0,55 cal/cm · s · k im Temperaturbereich zwischen 0° C und 200° C, während Kunststoffe in der Regel schlechtere Wärmeleiter sind. Der Wärmeübergang von einem Körper einer bestimmten Temperatur zu seiner Umgebung wird durch den Wärmeübergangswert beschrieben und der Wärmedurchgang durch einen Körper, beispielsweise eine Platte, beschreibt man durch den Wärmedurchgangswert. Der Wärmeübergangswert hängt, wie bereits vorstehend beschrieben, stark von der Oberflächenbeschaffenheit ab und der Wärmedurchgangswert von der Plattendicke. Das u-förmige Gehäuse U mit angeformten Reflektoren R1 und R2 gemäß der Erfindung weist den Vorteil auf, dass auf überraschend einfache und kostengünstige Art und Weise das Verhältnis von Wärmeübergangswert zu Wärmedurchgangswert (durch Umspritzen des flexiblen Leitungsträgers T und der montierten Chip-Leuchtdioden LED mit der ersten transparenten Vergussmasse V1 und Wärmekapazität aus Kunststoffgehäuse U und der beiden Vergussmassen V1, V2) derart optimiert wurde, dass eine besonders effektive Wärmeabfuhr gewährleistet ist. Weiterhin weist die erste Ausführungsform des erfindungsgemäßen Leuchtdiodenbands den Vorteil auf, dass - obwohl dieses vertikal in Erstreckungsrichtung biegeelastisch ist - dennoch ein guter dauerhafter Schutz der im Gehäuse befindlichen Bauelemente vor äußeren Einflüssen bewirkt wird.

Das Verfahren zur Herstellung des Leuchtdiodenbands gemäß der ersten Ausführungsform mittels eines CNC gestützten, in X + Y-Achsen verfahrbaren Dosierkopfs umfasst folgende Arbeitsschritte:
a) Einfüllen (unter genauer Vorgabe des Volumens pro Meter in die Form F maschinell linear, wobei die Füllhöhe ab Basis FÜK = Überlaufkante ÜK/Stirnseite der zweiten Vergussmasse V2 klar definiert und in beiden Teilabschnitten der Vergussform F identisch ist) der zweiten Vergussmasse V2, welche flüssig und transluzent ist, zwischen den Schenkeln FS1, FS2 und der Schrägfläche der Leiste L der Vergussform F und Aushärten in der Vergußform F,
b) Einfüllen (unter genauer Vorgabe des Volumens pro Meter in die Form F maschinell linear, bis die Oberfläche gerade mit den Formenoberkanten rechts und links bündig abschließt) des Kunststoffmaterials des Gehäuses U bis zum Füllrand der Vergussform F derart, dass die beiden Schenkel S1, S2 mit angeformten Reflektoren R1, R2 und die Basis UB des U-förmigen Gehäuses U ausgestaltet werden (es verbleiben beide Schichten (Kunststoffmaterial und zweite Vergussmasse V2) in der Form F bis diese soweit ausgehärtet sind und entformt werden können; damit ist der Mantel zur Aufnahme des LED Moduls (beispielsweise flexible Leiterplatte, biegsam) fertiggestellt),
c) Ankleben (insbesondere mittels eines beidseitigem, vorzugsweise wärmeleitenden Klebebands) der flexiblen Leiterplatte (Leitungsträger T mit den montierten Chip-Leuchtdioden LED) im U-förmigen Gehäuse U auf der Basis UB (insbesondere wegen Reflexion weißes Polyurethan PU des Mantels),
d) Einfüllen (unter genauer Vorgabe des Volumens pro Meter in die Form F maschinell linear, bis die Oberfläche gerade den Übergang vom weißen des Mantels zum transluzenten PU/ der zweiten Vergussmasse V2 erreicht) der ersten Vergussmasse V1, welche transparent ist, zwischen die Reflektoren R1, R2 und
e) Einfüllen der zweiten Vergussmasse V2 zwischen die zwei auf der Stirnseite der Schenkel S1, S2 angeordneten Kappenteile K1, K2, wodurch diese als drittes Kappenteil K3 den Deckel schließt.

In FIG. 8 ist eine zweite Ausführungsform einer Vergussform F1 im Schnitt dargestellt, welche ebenfalls wie die Vergussform F nach Fig. 7 nach einer Seite hin offen ist und einen baukastenartigen Aufbau des erfindungsgemäßen Leuchtdiodenbands ermöglicht. Der Konturenverlauf mit als sich von dieser Seite senkrecht erstreckenden Schenkeln FS11, FS21 und einer zur offenen Stirnseite sich erhebenden, annähernd trapezförmigen Leiste L1 wurde beibehalten. Zur Ausgestaltung einer gekrümmten, insbesondere einer halbrunden Ausformung (siehe FIG. 9) der Kappenteile K1, K2 zwischen Überlaufkante ÜK und Kante RV1 weist korrespondierend hierzu die Vergussform F1 die entsprechenden Kanten FÜK und FRV1 auf. Weiterhin weisen die Schenkel FS11, FS21 der Vergussform F1 eine Profilierung FP auf, welche kongruent zur Profilierung P der zweiten Ausführungsform des Leuchtdiodenbands (siehe FIG. 9) ist. Diese Profilierung P dient einerseits zur Positionierung von Halteklammern des Leuchtdiodenbands, andererseits wird durch die Vergrößerung der Oberfläche die Wärmeabführung verbessert.

Das Verfahren zur Herstellung der in FIG. 9 dargestellten zweiten Ausführungsform des Leuchtdiodenbands gemäß der Erfindung ist zusammenfassend nachfolgend beschrieben:
1) Einfüllen des transluzenten Materials/zweite Vergussmasse V2 in die Form F1 ab Basis FÜK = Überlaufkante ÜK bis zu den Kanten FLK, FLK1, FLK2. Die Kanten FLK, FLK1, FLK2 dienen dazu im fertigen Produkt eine saubere, seitliche Leuchtkante LK1, LK2 zu erzielen.
2) Auffüllen bis zum Füllrand der Vergussform F1 mit weißen, vorzugsweise wärmeleitenden PU, so dass der Grundkörper in U-Form (vorzugsweise mit Schrägfläche als Reflektoren R1, R2 und korrespondierend zur trapezförmigen Leiste L1 der Vergussform F1), d.h. das Gehäuse U entsteht; Aushärten lassen und entformen.
3) LED Träger (d.h. Leitungsträger T mit den montierten Chip-Leuchtdioden LED) mit vorzugsweise wärmeleitendem Klebeband einkleben.
4) Mit transparentem PU/erste Vergußmasse V1 bis zur definierten Kante RV1 am transluzenten Material/zweite Vergussmasse V2 auffüllen.
5) Kappe K3 mit transluzenten Material/zweite Vergussmasse V2 schließen (dreiteilig mit den Kappenteilen K1, K2 und K3). Durch die gekrümmte (halbrund, konkav oder konvex) oder geradlinige (zwischen Überlaufkante ÜK und Kante RV1) Ausformung der Kappenteile K1 und K2 wird die zuerst gegossene, von oben sichtbare, Fläche des Materials/zweite Vergussmasse V2 minimiert, wodurch ein gleichmäßigeres Lichtbild im Vergleich zur ersten Ausführungsform des Leuchtdiodenbands erzielbar ist.

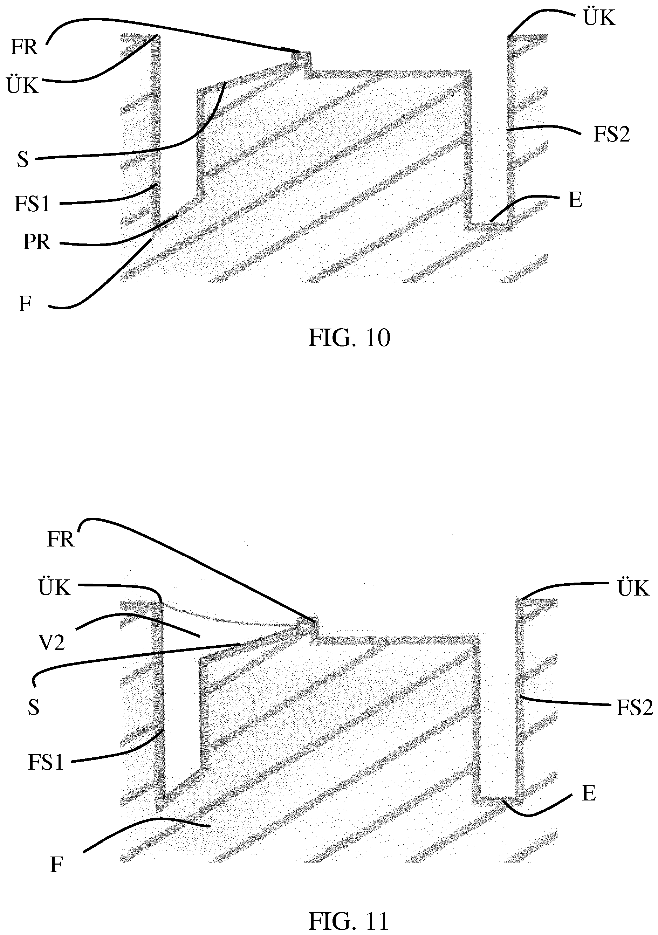

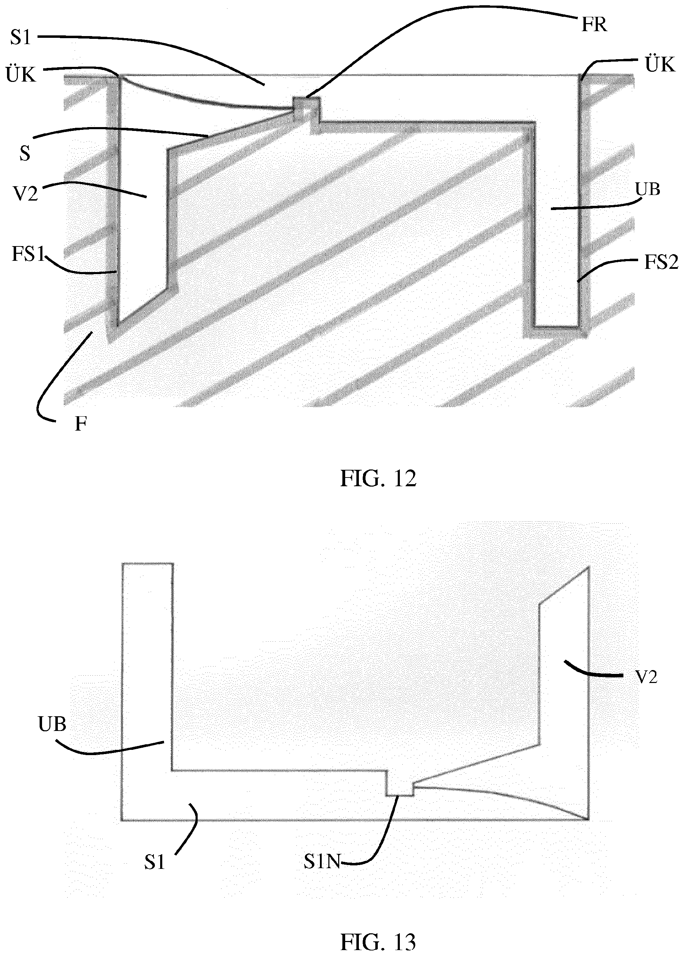

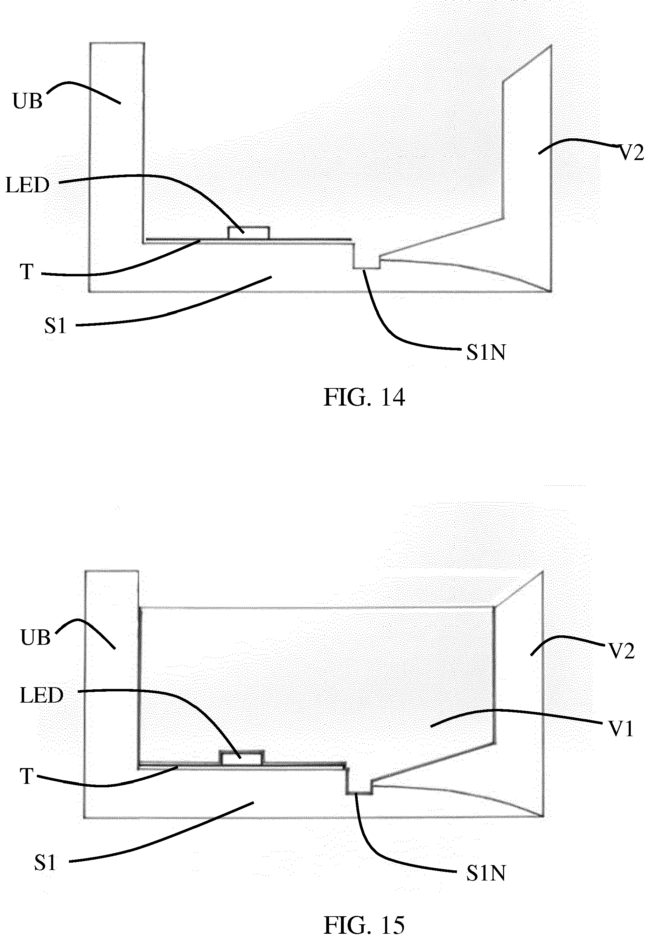

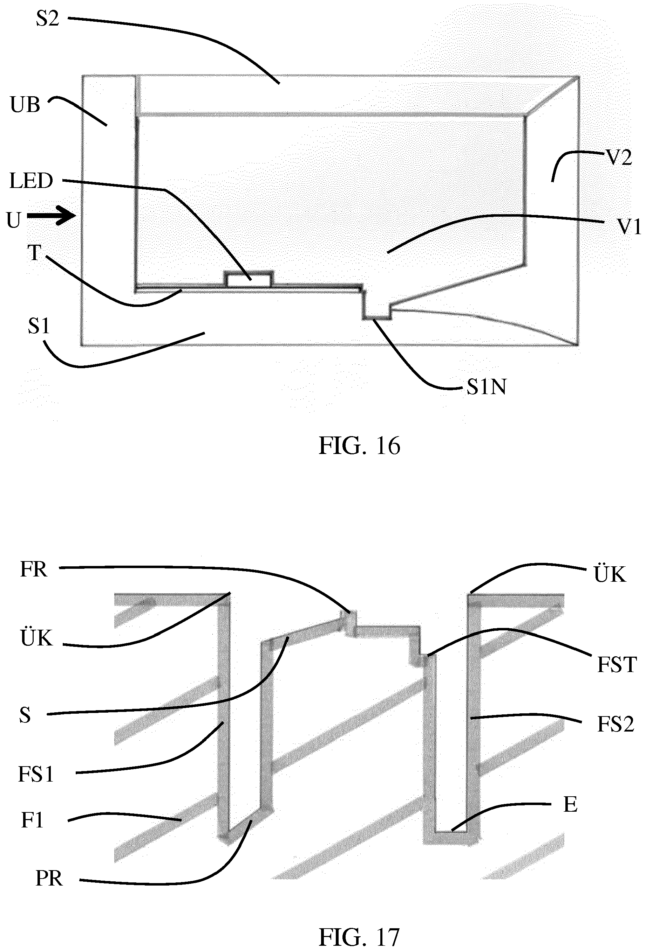

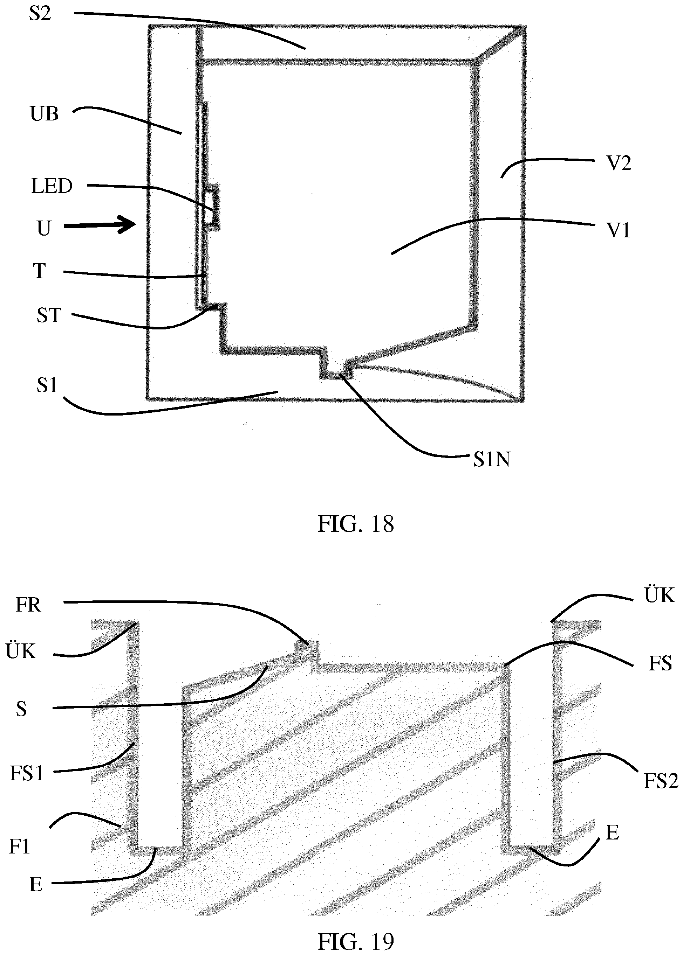

FIG. 10 zeigt eine weitere Ausgestaltung der erfindungsgemäßen Vergussform F im Schnitt, FIG. 11 bis FIG. 16 die einzelnen aufeinanderfolgenden Verfahrensschritte zum Aufbau eines erfindungsgemäßen Leuchtdiodenbands. FIG. 17 zeigt eine weitere Ausführungsform einer Vergussform im Schnitt zur Herstellung der in FIG. 18 dargestellten weiteren Ausführungsformen des Leuchtdiodenbands gemäß der Erfindung.

Die in FIG. 10 dargestellte Vergussform F ist als eine nach einer Seite hin offene Vergussform F, deren Konturenverlauf als sich von dieser Seite senkrecht erstreckende Schenkel FS1, FS2 und einem zur offenen Stirnseite zwischen den Schenkel FS1, FS2 sich erhebenden Füllrand FR aufweist, ausgestaltet. Weiterhin weist die Vergussform F zwei sich gegenüberliegende Überlaufkanten ÜK und eine Schrägfläche S auf, an welcher eine zweite Vergussmasse V2 unter genauer Vorgabe des Volumens pro Meter maschinell linear in die Form F eingefüllt wird.

FIG. 16 zeigt die weitere Ausführungsform des Leuchtdiodenband gemäß der Erfindung mit einem U-förmigen Gehäuse U, mit auf einem vertikal zur Erstreckungsrichtung flexiblen Leitungsträger T montierten Chip-Leuchtdioden LED und mit zwei in Abstrahlrichtung der Chip-Leuchtdioden LED übereinander und zwischen den beiden Schenkeln S1, S2 des Gehäuses U angeordneten Vergussmassen V1, V2. Im Einzelnen besteht mindestens der erste Schenkel S1 des U-förmigen Gehäuses U aus transluzenter, entsprechend dem Kapillareffekt in der Wandstärke sich verjüngender und in das Kunststoffmaterial des Gehäuses U übergehenden zweiten Vergussmasse V2, wobei an diesem Schenkel S1 der flexible Leitungsträger T angeordnet und in der ersten transparenten Vergußmasse V1 eingebettet ist. Das Licht der Chip-Leuchtdioden LED wird von den Innenflächen des Gehäuses U reflektiert und durch die zweite Vergussmasse V2 an der Stirnseite diffus abgestrahlt. Erfindungsgemäß ist das Leuchtdiodenband horizontal in Erstreckungsrichtung biegeelastisch.

Insbesondere weist der erste Schenkel S1, wie in FIG. 16 dargestellt ist, eine an das Ende der zweiten Vergussmasse V2 angrenzende Nut S1N auf. Im Bereich treffen drei verschiedene Materialien, nämlich des Schenkels S1 und der beiden Vergussmasse V1, V2 aufeinander, wobei durch die Ausgestaltung der Nut S1N eine dauerhafte Biegeelastizität in diesem Bereich erfüllt werden kann.

Vorzugsweise ist das Kunststoffmaterial des Gehäuses U nach FIG. 16 mit Keramik-Füllstoffen angereichert und dadurch wärmeleitend. In vorteilhafter Weise ist der Leitungsträger T wärmeleitend und mit Klebeband, insbesondere einem wärmeleitenden Klebeband am Schenkel S1 des Gehäuses U angeklebt. Das Klebeband übernimmt hier dann eine Doppelfunktion, nämlich Positionierung des LED-Moduls/Leitungsträgers T vor dem Vergießen und Verbesserung der Wärmeableiteigenschaften, so dass Wärmestaus vermieden sind. Gleiches gilt für den Leitungsträger T, nämlich Positionierung der LED's und Wärmeleitung einschließlich Vergrößerung der Oberfläche (Wärmestrahlung). Das u-förmige Gehäuse U nach FIG. 16 mit am Schenkel S1 angeordneten LED-Modul/ Leitungsträger T gemäß der Erfindung weist den Vorteil auf, dass auf überraschend einfache und kostengünstige Art und Weise das Verhältnis von Wärmeübergangswert zu Wärmedurchgangswert (durch Umspritzen des flexiblen LED-Modul/Leitungsträgers T und der montierten Chip-Leuchtdioden LED mit der ersten transparenten Vergussmasse V1 und Wärmekapazität aus Kunststoffgehäuse U und der beiden Vergussmassen V1, V2) derart optimiert wurde, dass eine besonders effektive Wärmeabfuhr gewährleistet ist. Weiterhin weist das erfindungsgemäße Leuchtdiodenband nach FIG. 16 den Vorteil auf, dass - obwohl dieses horizontal in Erstreckungsrichtung biegeelastisch ist - dennoch ein guter dauerhafter Schutz der im Gehäuse befindlichen Bauelemente vor äußeren Einflüssen bewirkt wird.

Das Verfahren zur Herstellung des erfindungsgemäßen Leuchtdiodenbands nach FIG. 16 mittels eines CNC gestützten, in X + Y-Achsen verfahrbaren Dosierkopfs umfasst folgende Arbeitsschritte:
a) Einfüllen (unter genauer Vorgabe des Volumens pro Meter in die Form F; maschinell linear) der zweiten Vergussmasse V2, welche flüssig und transluzent ist, und Aushärten in der Vergussform F (wobei durch die niedrige Oberflächenspannung eines flüssigen, transluzenten Polyurethan PUs/Vergussmasse V2 sich die Außenkante bündig bis an das Ende der Form F nach oben zieht, sodass ein gleichmäßiger Abschluss an der Oberkante der Form F mit dem transluzenten PU/ Vergussmasse V2 entsteht),
b) Einfüllen (unter genauer Vorgabe des Volumens pro Meter in die Form F; maschinell linear, bis zur Überlaufkante ÜK der Vergußform F) des Kunststoffmaterial des Gehäuses U und dabei Ausbilden des ersten Schenkels S1 und der Basis UB des U-förmigen Gehäuses U (es verbleiben beide Schichten (Kunststoffmaterial und zweite Vergussmasse V2, in der Form F bis diese soweit ausgehärtet sind und entformt werden können; damit ist der Mantel (weißes Polyurethan PU) zur Aufnahme des LED Moduls (beispielsweise flexible Leiterplatte, biegsam) fertiggestellt),
c) Positionieren unterhalb einer an das Ende der zweiten Vergussmasse V2 angrenzende Nut S1N des ersten Schenkels S1 des Gehäuses U und Ankleben (insbesondere mittels eines beidseitigem, wärmeleitenden Klebebands) der flexiblen Leiterplatte (Leitungsträger T mit den montierten Chip-Leuchtdioden LED),
d) Einfüllen (unter genauer Vorgabe des Volumens pro Meter in das u-förmige Gehäuse entformt aus Form F; maschinell linear) der ersten Vergussmasse V1, welche transparent ist, bis zum inneren Rand der Basis UB und dem gegenüberliegenden Rand der zweiten Vergussmasse V2 (Beginn der Verjüngung der Schenkel S1 und S2) und
e) Einfüllen des Kunststoffmaterials (unter genauer Vorgabe des Volumens pro Meter in das u-förmige Gehäuse entformt aus Form F; maschinell linear) bis zum äußeren Rand der Basis UB und dem gegenüberliegenden Rand der zweiten Vergussmasse V2 zur Ausgestaltung des zweiten Schenkel S2 des U-förmigen Gehäuses U.

In FIG. 17 ist eine weitere Ausführungsform einer Vergussform F1 im Schnitt dargestellt, welche ebenfalls wie die Vergussform F nach FIG. 10 nach einer Seite hin offen ist. Der Konturenverlauf mit als sich von dieser Seite senkrecht erstreckende Schenkel FS1, FS2, einem zur offenen Stirnseite zwischen den Schenkel FS1, FS2 sich erhebenden Füllrand FR, zwei sich gegenüberliegende Überlaufkanten ÜK und eine Schrägfläche S wurde beibehalten. Im Vergleich zur Vergussform F nach FIG. 10 weist die Vergussform F1 an einem Schenkel, in FIG.17 der Schenkel FS2 eine Stufe FST und in FIG.18 der Schenkel S1 eine Stufe ST auf, welche als Anschlag für den flexiblen Leitungsträger T (Positionierung) dient.

Demgemäß wurde der prinzipielle Formenbau des U-förmigen Kunststoffgehäuses U beibehalten und es wird sich ebenfalls der Kapillareffekt bei der transluzenten Schicht/zweiten Vergussmasse V2 zu Nutze gemacht. Auch hier verjüngt sich die transluzente Schicht/zweiten Vergussmasse V2 im Schenkel S1. Abweichend dazu wird das LED Modul (LED Band)/ flexible Leitungsträger T um 90° versetzt an der Basis UB und genau positioniert durch die Stufe ST eingebracht, also genau gegenüber der transluzenten Schicht/zweiten Vergussmasse V2. Darauf folgen die vorstehend beschriebenen Produktionsschritte, nämlich mit transparentem Material/erste Vergussmasse V1 auffüllen und mit weißem Material das U-förmige Gehäuse U schließen (Schenkel S2).

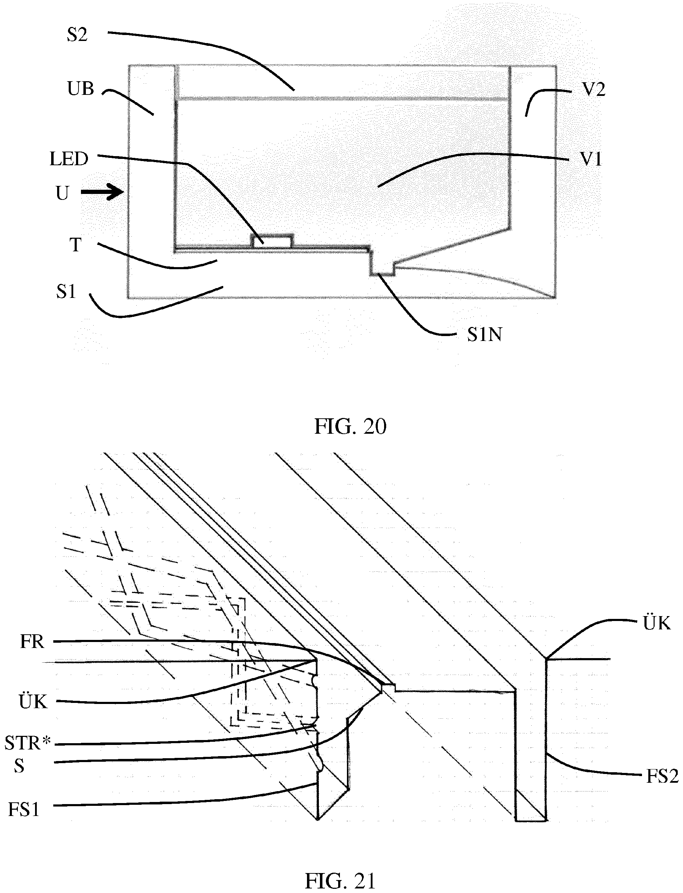

FIG. 19 zeigt eine weitere Ausführungsform einer Vergussform gemäß der Erfindung im Schnitt und FIG. 20 die Ausführungsform des Leuchtdiodenbands nach FIG. 19. Im Vergleich zur vorstehend beschriebenen Ausführungsform weisen beide Schenkel S1 und S2 stumpfe Enden auf.

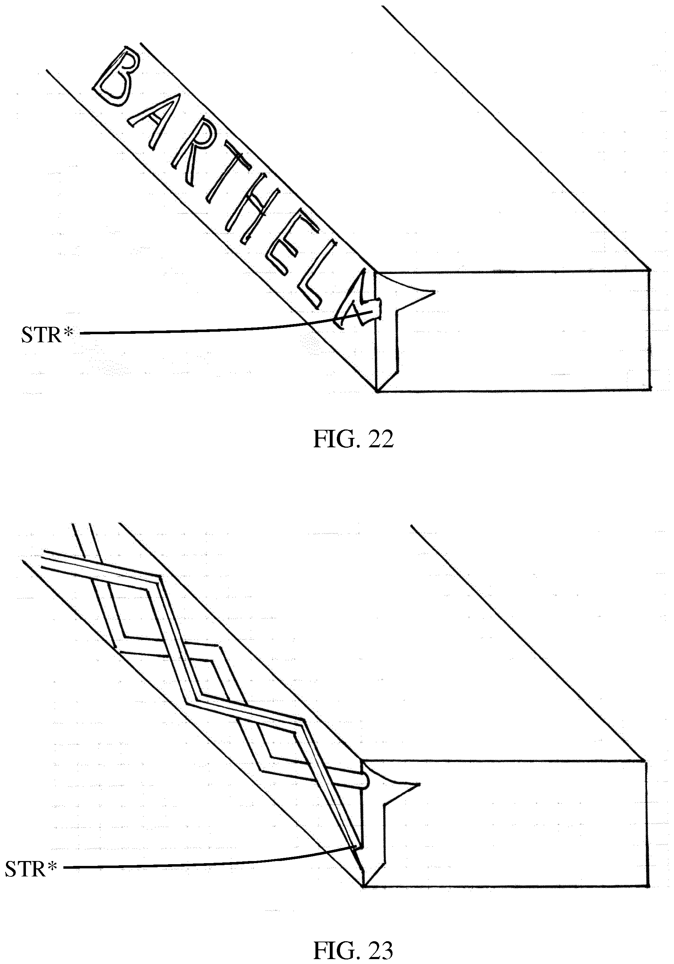

Weiterhin zeigt FIG. 21 im Detail eine Struktur an der Lichtaustrittsfläche, d.h. einen Formenaufbau mit eingebrachten Konturen in der transluzenten, lichtemittierenden Schicht, so dass auf überraschend einfache Art und Weise eine beliebige Oberflächenänderungen der transluzenten, lichtemittierenden Schicht/ zweiten Vergussmasse V2 ermöglicht wird. Mögliche 3-dimensionale Ausformungen STR* sind Schriften (siehe FIG. 22) wie Firmenlogos (Schrift in transluzenter Schicht), 3-Dimensionale Konturen wie Prismenoptik o.ä. Die Ausformung (in Form von geometrischen Linien, siehe FIG. 23) der transluzenten Schicht kann aufbauend (erhaben sein) oder abtragend (Mulde) sein, d.h. beispielsweise prismenförmige oder halbrunde Konturen in transluzenter Schicht/zweiter Vergussmasse V2.

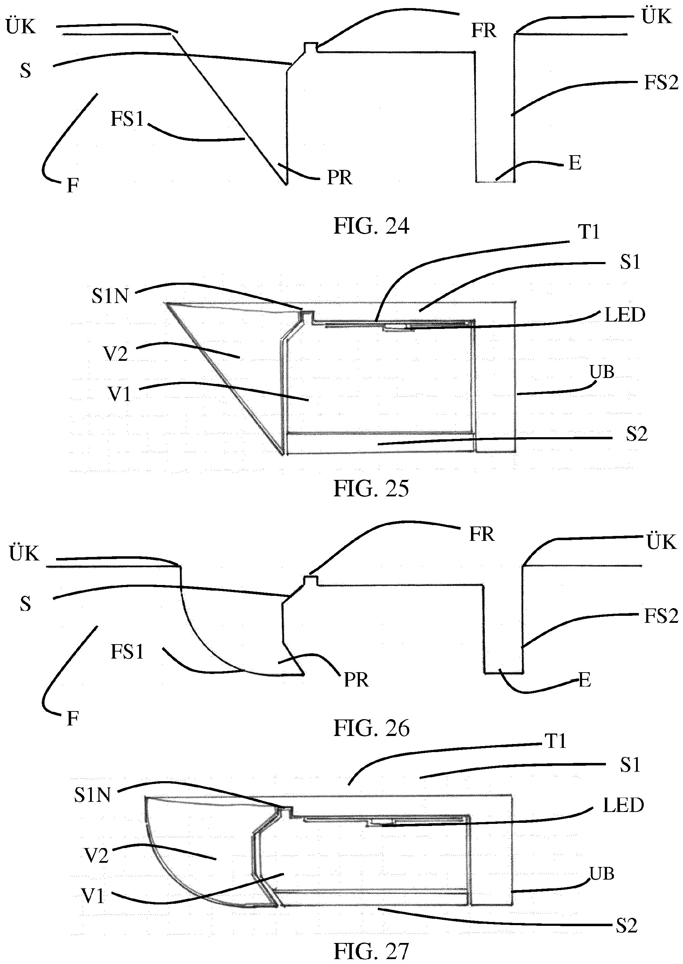

FIG. 24 zeigt die Ausgestaltung der Form des Lichtaustritts (Deckel bzw. zweite Vergussmasse V2) in Dreiecksform. Der transluzente Teil wird so verändert, dass eine Abstrahlung nach oben und zur Seite möglich ist (siehe Leuchtdiodenband nach FIG. 25). Denkbar wäre auch eine Rücken-an-Rücken Montage, um eine breitere Abstrahlung zu realisieren.

Weiterhin zeigt FIG. 26 die Ausgestaltung der Form des Lichtaustritts (Deckel bzw. zweite Vergussmasse V2) als halbrunde 90° mit Hinterschnitt. Änderung hierbei ist der vergrößerte transluzente Teil, der eine Abstrahlung nach oben und zu einer Seite hin ermöglicht (siehe Leuchtdiodenband nach FIG. 27). Durch die spezielle Ausformung des transluzenten Elementes (Hinterschnitt) wird eine gleichmäßigere Ausleuchtung des transluzenten Elements erreicht.

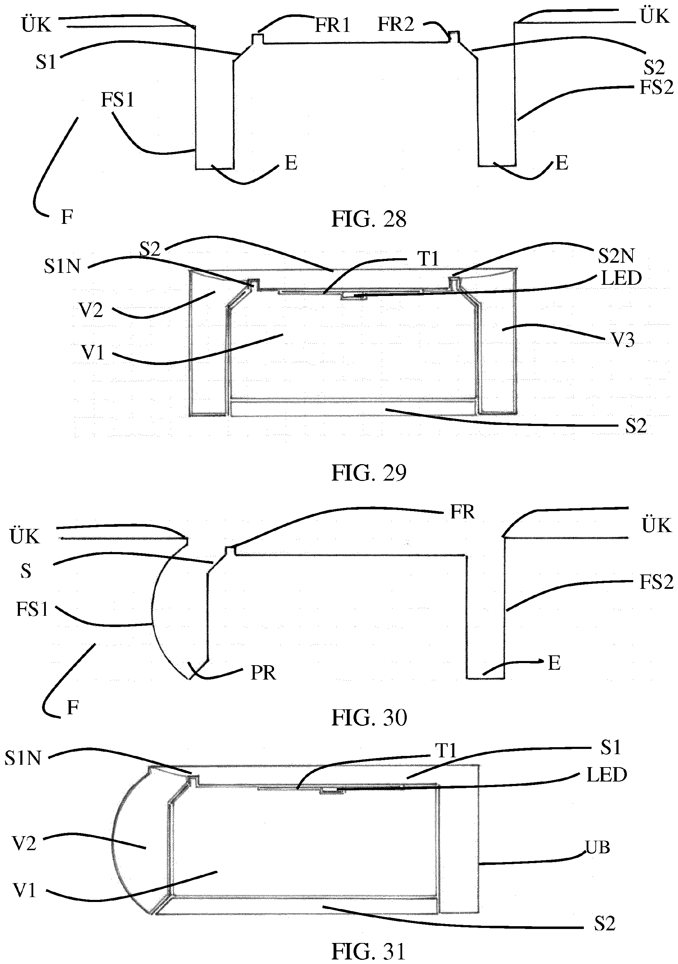

Weiterhin zeigt FIG. 28 die Ausgestaltung der Form des Lichtaustritts (Deckel bzw. zweite Vergussmasse V2) als rechteckige/quadratische 270°. Bei dieser Ausführung (siehe Leuchtdiodenband nach FIG. 29) sind beide Schenkel transluzent ausgeführt. Dadurch wird eine 3-seitige Abstrahlung erreicht, wobei oben unten biegen möglich jedoch links und rechts nicht möglich ist.

Weiterhin zeigt FIG. 30 die Ausgestaltung der Form des Lichtaustritts (Deckel bzw. zweite Vergussmasse V2) als Linse mit leichtem Hinterschnitt. Der transluzente Schenkel wird jedoch als Linse (mit leichtem Hinterschnitt) ausgeführt (siehe Leuchtdiodenband nach FIG. 31). Wichtig ist die definierte Füllkante am Ende der Linse, so klein wie möglich so groß wie nötig. Diese erlaubt einen sauberen Abschluss der transluzenten Linse.

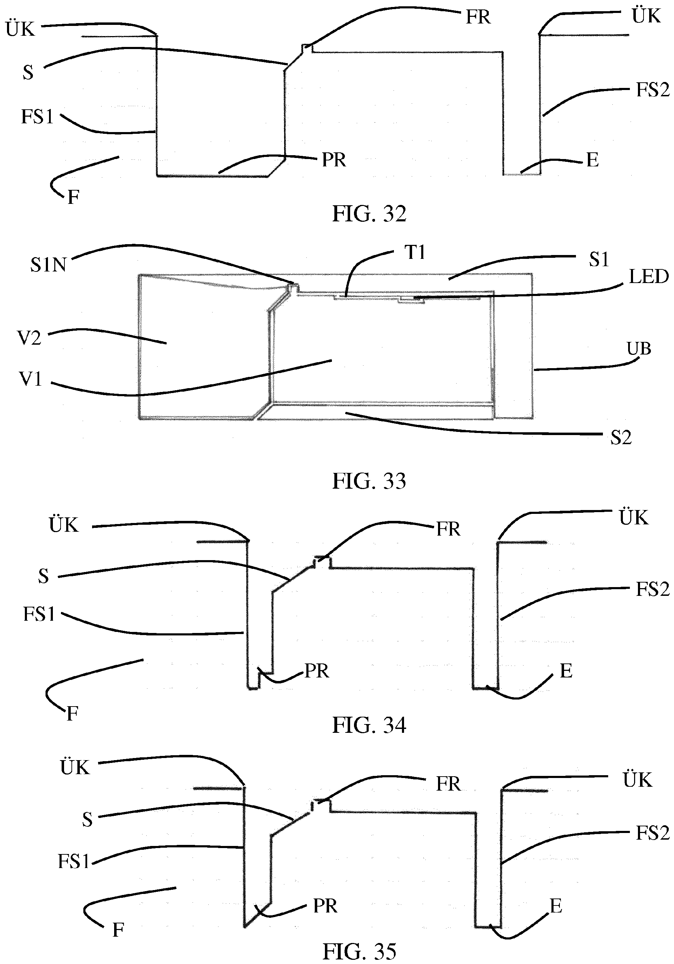

Weiterhin zeigt FIG. 32 die Ausgestaltung der Form des Lichtaustritts (Deckel bzw. zweite Vergussmasse V2) als rechteckige mit verbreiterter Abstrahlung. Durch die Verbreiterung des transluzenten Schenkels (siehe Leuchtdiodenband nach FIG. 33)wird eine verbreiterte Abstrahlung erzielt werden, jedoch ohne die klare rechteckige Außenkontur zu verändern.

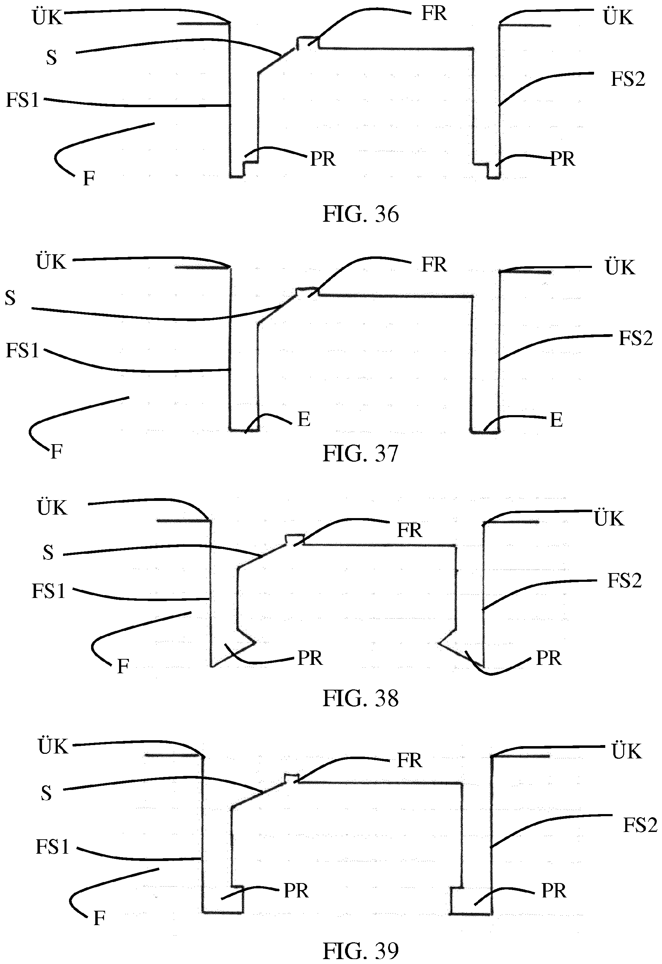

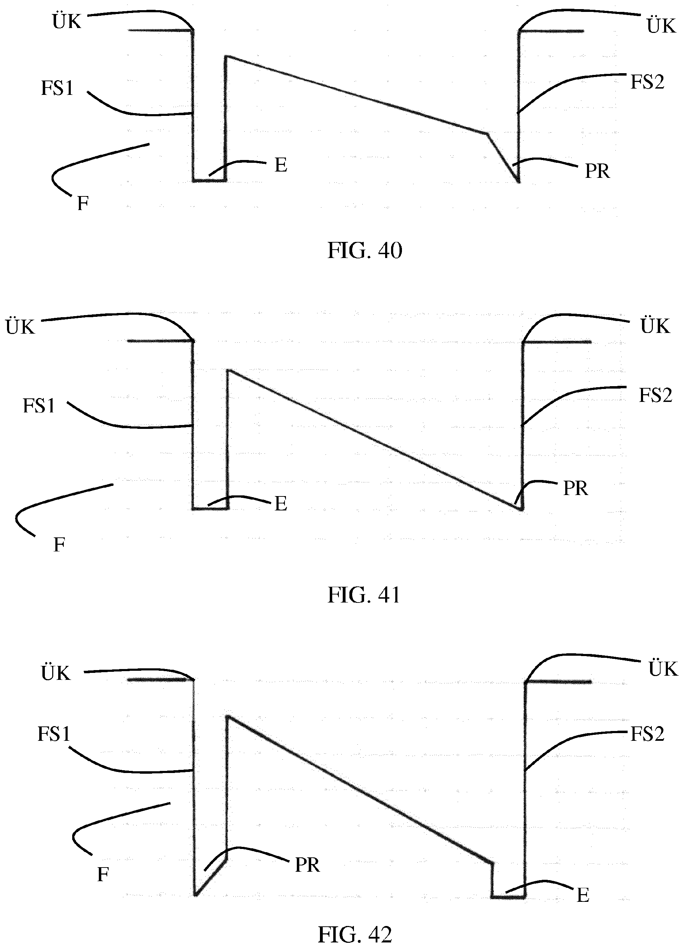

FIG. 34 bis FIG. 42 zeigen alternative Ausformungen der U-Gehäuseschenkel S1, S2, wobei die Stirnseiten der beiden Schenkel FS1, FS2 der Vergussform F entweder ein stumpfes Ende E oder eine Profilierung PR oder jeweils beides E, PR aufweisen. Dabei zeigt FIG. 34 im Detail die Form für ein Leuchtdiodenband mit weißem Schenkel gerade auslaufend und transluzenten Schenkel mit Stufe, FIG. 35 im Detail die Form für ein Leuchtdiodenband mit weißem Schenkel gerade auslaufend und transluzenten Schenkel verjüngend, FIG. 36 im Detail die Form für ein Leuchtdiodenband mit weißem und transluzenten Schenkel mit Stufe, FIG. 37 im Detail die Form für ein Leuchtdiodenband mit weißem und transluzenten Schenkel gerade auslaufend, FIG. 38 im Detail die Form für ein Leuchtdiodenband mit weißem und transluzenten Schenkel mit Dreiecksform zum Ende hin, FIG. 39 im Detail die Form für ein Leuchtdiodenband mit weißem und transluzenten Schenkel mit rechteckigem Überstand. FIG. 40 bis 42 zeigen die Form für ein Leuchtdiodenband, bei dem der LED Streifen an dem senkrechten Schenkel aufgebracht wird, dieser den angestellten Boden an strahlt, welcher das Licht reflektiert und nach oben leitetet, wo eine transluzente Schicht für ein gleichmäßiges Lichtbild sorgt. Im Detail zeigt FIG. 40 die Form für ein Leuchtdiodenband mit einem Schenkel gerade und stumpf, und einem Schenkel verjüngend, FIG. 41 mit einem komplett als Reflektor ausgeformten Schenkel gerade und stumpf, und einem Schenkel verjüngend und FIG. 42 mit einem geraden und stumpfen Schenkel, und den anderen Schenkel verjüngend.

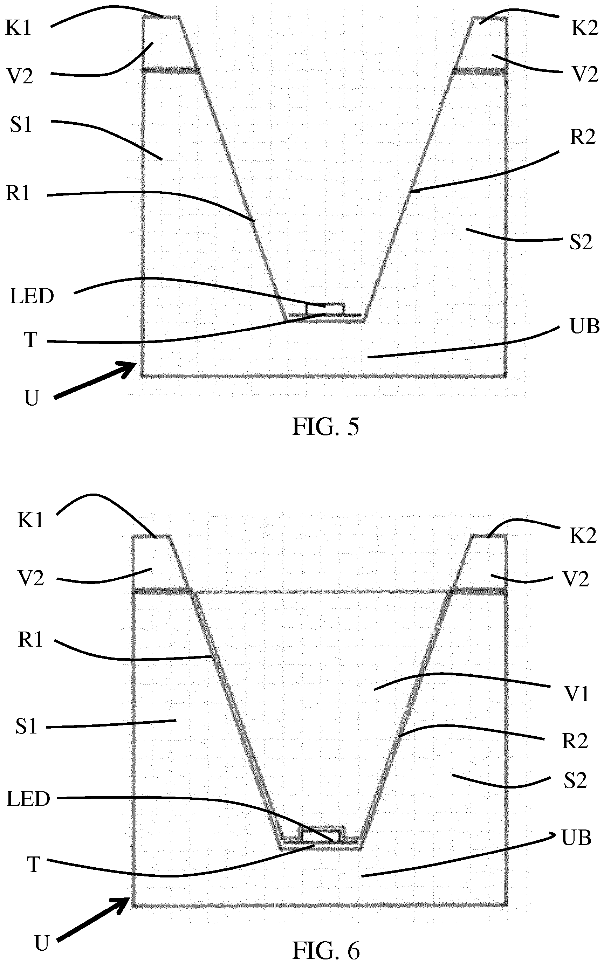

Zusammenfassend weisen die erfindungsgemäßen baukastenartig zusammenstellbaren Leuchtdiodenbänder folgende Vorteile auf:
- Zulässiges oben/unten Biegen des Leuchtdiodenbands (vertikal in Erstreckungsrichtung, FIG. 6) oder zulässiges Biegen des Leuchtdiodenbands horizontal (FIG. 16) oder vertikal (FIG. 18) in Erstreckungsrichtung.
- Gemäß dem inneren Aufbau bleibt das von der LED's emittierte Licht sozusagen im weißen reflektierendem "U" gefangen und kann nur durch die transluzent aufgebrachte Schicht/zweite Vergussmasse V2 um 90° versetzt zum LED-Streifen T oder überwiegend direkt (LED Modul/LED Band/ flexibler Leitungsträger T an der Basis UB angeordnet) diffus abgestrahlt werden.
- Der große Abstrahlwinkel von 180° (FIG. 16, FIG. 18) und der in sich homogene Lichtaustritt.
- Durch die erfindungsgemäße Maßnahme, die transluzente Schicht V2 bzw. die transluzente, seitlich abstrahlende Schicht V2 als erstes zu gießen (FIG. 6, FIG. 16 und FIG. 18), kann im letzten Fertigungsschritt beim Einfüllen auf verjüngende Kanten verzichtet werden.
- Das weiße verwendete PU-Material des u-förmigen Gehäuses U ist mit Füllstoffen, vorzugsweise Keramik-Füllstoffen angereichert und dadurch wärmeleitend; in Kombination mit dem vorzugsweise wärmeleitenden Klebeband, mit welchem das LED Modul /Leitungsträger T mit den montierten Chip-Leuchtdioden LED eingeklebt ist, wird die Wärme optimal abgeführt und optimale Lebensdauervoraussetzungen sind somit gegeben.
- Der innere Aufbau kann als Reflektor konzipiert (FIG. 6, FIG. 16 und FIG. 18) werden und maximiert dadurch den Lichtausstoß.
- Der große Abstrahlwinkel von über 180° bis nahezu 270° und in sich homogener Lichtaustritt (FIG. 6).

Die Erfindung ist nicht auf die dargestellten und beschriebenen Ausführungsbeispiele beschränkt, sondern umfasst auch alle im Sinne der Erfindung gleichwirkende Ausführungen. Im Rahmen der Erfindung kann auch nur ein Reflektor vorgesehen werden (in der Zeichnung nicht dargestellt, d.h. ein Schenkel mit angeordnetem Reflektor und ein Schenkel ohne Reflektor sowie hierzu komplementäre Vergussform), welcher auf der gegenüberliegenden Seite des Schenkels, welcher den Leitungsträger T trägt, angeordnet ist, wobei der Leitungsträger T wärmeleitend ist und der Schenkel gesamt zur Wärmeableitung dient; über den Leitungsträger T kann eine dritte Schicht, insbesondere eine Gelschicht, eingebracht werden, wodurch kleine Biegeradien ermöglicht werden.

Entsprechend kann im Rahmen der Erfindung auch ein Reflektor vorgesehen werden (in der Zeichnung nicht dargestellt, d.h. an der Basis UB oder am Schenkel S2 wird ein Reflektor angeordnet), wobei der Leitungsträger T wärmeleitend ist und Basis UB/Schenkel Sl/Schenkel S2 gesamt zur Wärmeableitung dient.

Weiterhin kann im Rahmen der Erfindung der Konturenverlauf der Mantelflächen der baukastenartig aus Teilen (Gehäuse und Deckel bzw. Lichtaustritt einschließlich Lichtaustritt durch die Gehäuseteile, nämlich Schenkel und Basis) zusammenstellbaren Leuchtdiodenbänder beliebig gestaltet werden.

## Patentansprüche

1. Leuchtdiodenband mit einem U-förmigen Gehäuse (U), mit zwei Schenkeln (S1, S2) und einer Basis (UB), mit auf einem flexiblen Leitungsträger (T) montierten Chip-Leuchtdioden (LED) und mit zwei zwischen den beiden Schenkeln (S1, S2) des Gehäuses (U) angeordneten Vergussmassen (V1, V2), **dadurch gekennzeichnet, dass** mindestens der erste Schenkel (S1) des U-förmigen Gehäuses (U) aus transluzenter, in der Wandstärke sich verjüngender und in das Kunststoffmaterial des Gehäuses (U) übergehenden zweiten Vergussmasse (V2) besteht, dass an diesem Schenkel (S1) der flexible Leitungsträger (T) angeordnet und in der ersten transparenten Vergussmasse (V1) eingebettet ist und dass das Licht der Chip-Leuchtdioden (LED) von den Innenflächen des Gehäuses (U) reflektiert und durch die zweite Vergussmasse (V2) diffus abgestrahlt wird, wobei das Leuchtdiodenband in Erstreckungsrichtung biegeelastisch ist.

2. Leuchtdiodenband mit einem U-förmigen Gehäuse (U) mit zwei Schenkeln (S1, S2) und einer Basis (UB), mit auf einem flexiblen Leitungsträger (T) montierten Chip-Leuchtdioden (LED) und mit zwei zwischen den beiden Schenkeln (S1, S2) des Gehäuses (U) angeordneten Vergussmassen (V1, V2), die Chip-Leuchtdioden (LED) sind an der Basis (UB) angeordnet, **dadurch gekennzeichnet, dass** das Leuchtdiodenband mindestens zwei an den Schenkeln (S1, S2) angeformte Reflektoren (R1, R2), welche das Licht der an der Basis (UB) des Gehäuses (U) angeordneten Chip-Leuchtdioden (LED) reflektieren, aufweist, und dass die zweite Vergussmasse (V2), welche transluzent ist, an der Stirnseite der beiden Schenkeln (S1, S2) eine dreiteilige Kappe (K1, K2, K3) derart ausbildet, dass die zwei auf der Stirnseite der Schenkel (S1, S2) angeordnete Kappenteile (K1, K2) den Füllrand für das Einfüllen der ersten Vergussmasse (V1), welche transparent ist, zwischen die Reflektoren (R1, R2) bilden und danach die eingefüllte zweite Vergussmasse (V2) als drittes Kappenteil (K3) den Deckel schließt, wobei das Leuchtdiodenband in Erstreckungsrichtung biegeelastisch ist.

3. Leuchtdiodenband nach Anspruch 2, **dadurch gekennzeichnet, dass** Schenkel (S1, S2) und Reflektoren (R1, R2) einstückig sind und dass die Reflektoren (R1, R2) jeweils als Schrägfläche in offener V-förmiger Anordnung zueinander ausgestaltet sind.

4. Leuchtdiodenband nach Anspruch 1 oder 2, **dadurch gekennzeichnet, dass** das Kunststoffmaterial des Gehäuses (U) mit wärmeleitenden Füllstoffen angereichert und dadurch wärmeleitend ist, dass der Leitungsträger (T) wärmeleitend ist und dass der Leitungsträger (T) mit Klebeband an der Basis (UB) des Gehäuses (U) oder am ersten Schenkel (S1) angeklebt ist.

5. Leuchtdiodenband nach Anspruch 2, **dadurch gekennzeichnet, dass** die Kappenteile (K1, K2) zwischen einer Überlaufkante (ÜK) und einer Kante (RV1) eine gekrümmte oder schräg verlaufende Mantelfläche ausformen.

6. Leuchtdiodenband nach Anspruch 2, **dadurch gekennzeichnet, dass** die Mantelflächen beider Schenkel (S1, S2) des U-förmigen Gehäuses (U) eine Profilierung (P) aufweisen.

7. Leuchtdiodenband nach Anspruch 2, **dadurch gekennzeichnet, dass** die Stirnseiten der beiden Schenkel (FS1, FS2) der Vergußform (F) entweder ein stumpfes Ende (E) oder eine Profilierung (PR) oder jeweils beides (E, PR) aufweisen.

8. Leuchtdiodenband nach Anspruch 2, **dadurch gekennzeichnet, dass** beide Schenkel (S1, S2) des U-förmigen Gehäuses (U) eine seitliche Leuchtkante (LK1, LK2) aufweisen.

9. Leuchtdiodenband nach Anspruch 1, **dadurch gekennzeichnet, dass** der erste Schenkel (S1) eine an das Ende der zweiten Vergussmasse (V2) angrenzende Nut (SIN) aufweist.

10. Leuchtdiodenband nach Anspruch 1, **dadurch gekennzeichnet, dass** der erste Schenkel (S1) eine Stufe (ST) aufweist, welche zur Positionierung als Anschlag für den flexiblen Leitungsträger (T) dient.

11. Leuchtdiodenband nach einem oder mehreren der Ansprüche 1 bis 10, **dadurch gekennzeichnet, dass** der zweite Schenkel (S2) auf der Basis (UB) des Gehäuses (U) gegenüberliegend ein stumpfes Ende aufweist.

12. Leuchtdiodenband nach einem oder mehreren der Ansprüche 1 bis 11, **dadurch gekennzeichnet, dass** die Lichtaustrittsfläche der zweiten Vergussmasse (V2) eine dreidimensionale Ausformung (STR*) aufweist und dass die dreidimensionale Ausformung (STR*) als Schrift oder dreidimensionale Kontur ausgestaltet ist.

13. Leuchtdiodenband nach einem oder mehreren der Ansprüche 1 bis 12, **dadurch gekennzeichnet, dass** die zweite Vergussmasse (V2) im Querschnitt in Dreiecksform oder als halbrunde 90° mit Hinterschnitt oder als rechteckige/quadratische 270° oder als Linse mit Hinterschnitt oder als rechteckige mit verbreiterter Abstrahlung geformt ist.

14. Verfahren zur Herstellung eines Leuchtdiodenbands nach Anspruch 2, bei dem:
a) eine zweite Vergussmasse (V2), welche flüssig und transluzent ist, in eine nach einer Seite hin offenen Vergussform (F), deren Konturenverlauf als sich von dieser Seite senkrecht erstreckende Schenkel (FS1, FS2) und einer zur offenen Stirnseite sich erhebenden trapezförmigen Leiste (L) ausgestaltet ist, zwischen den Schenkeln (FS1, FS2) und der Schrägfläche der Leiste (L) der Vergussform (F) eingefüllt wird,
b) dass bis zum Füllrand der Vergussform (F) das Kunststoffmaterial des Gehäuses (U) derart eingefüllt wird, dass die beiden Schenkel (S1, S2) mit angeformten Reflektoren (R1, R2) und die Basis (UB) des U-förmigen Gehäuses (U) ausgestaltet werden, wobei die Reflektoren (R1, R2) das Licht der an der Basis (UB) angeordneten Chip-Leuchtdioden (LED) reflektieren,
c) der flexible Leitungsträger (T) mit den montierten Chip-Leuchtdioden (LED) in das U-förmige Gehäuse (U) auf der Basis (UB) angeordnet wird,
d) die erste Vergussmasse (V1), welche transparent ist, zwischen die Reflektoren (R1, R2) eingefüllt wird und
e) die zweite Vergussmasse (V2) zwischen die zwei auf der Stirnseite der Schenkel (S1, S2) angeordneten Kappenteile (K1, K2) eingefüllt wird, wodurch diese als drittes Kappenteil (K3) den Deckel schließt.

15. Verfahren zur Herstellung eines Leuchtdiodenbands nach Anspruch 1, bei dem:
a) eine zweite flüssige transluzente Vergussmasse (V2) in eine nach einer Seite hin offenen Vergussform (F), deren Konturenverlauf als sich von dieser Seite senkrecht erstreckende Schenkel (FS1, FS2) und einem zur offenen Stirnseite sich erhebenden Füllrand (FR) ausgestaltet ist, derart eingefüllt wird, dass diese zwischen dem Füllrand (FR) und einer Überlaufkante (ÜK) der Vergussform (F) eine gekrümmte Oberfläche ausbildet,
b) das Kunststoffmaterial des Gehäuses (U) bis zur Überlaufkante (ÜK) der Vergussform (F) eingefüllt wird und dabei den ersten Schenkel (S1) und die Basis (UB) des U-förmigen Gehäuses (U) ausbildet,
c) der flexible Leitungsträger (T) mit den montierten Chip-Leuchtdioden (LED) in das U-förmige Gehäuse (U) unterhalb einer an das Ende der zweiten Vergussmasse (V2) angrenzende Nut (SIN) des ersten Schenkels (S1) eingelegt wird,
d) die erste Vergussmasse (V1) bis zum inneren Rand der Basis (UB) und dem gegenüberliegenden Rand der zweiten Vergussmasse (V2) eingefüllt wird und
e) der zweite Schenkel (S2) des U-förmigen Gehäuses (U) bis zum äußeren Rand der Basis (UB) und dem gegenüberliegenden Rand der zweiten Vergussmasse (V2) eingefüllt wird.

## Claims

1. A light-emitting diode strip with a U-shaped housing (U), with two legs (S1, S2) and a base (UB), with chip LEDs (LED) mounted at a flexible conductor carrier (T) and with two potting compounds (V1, V2) arranged between the two legs (S1, S2) of the housing (U), **characterized in that** at least the first leg (S1) of the U-shaped housing (U) consists of a translucent, tapering in the wall thickness and passing in the plastic material of the housing (U) second potting compound (V2), **in that** on this leg (S1) the flexible conductor carrier (T) is arranged and embedded in the first transparent potting compound (V1) and **in that** the light of the chip light-emitting diodes (LED) is reflected from the inner surfaces of the housing (U) and diffused by the second potting compound (V2), wherein the light-emitting diode strip is flexible in the extension direction.

2. A light-emitting diode strip with a U-shaped housing (U), with two legs (S1, S2) and a base (UB), with chip LEDs (LED) mounted at a flexible conductor carrier (T) and with two potting compounds (V1, V2) arranged between the two legs (S1, S2) of the housing (U)), the chip light-emitting diodes (LED) are arranged on the base (UB), **characterized in that** the light emitting diode strip having at least two integrally reflectors (R1, R2) which are formed on the legs (S1, S2) and which reflect the light of the chip LEDs (LED) arranged on the base (UB) of the housing (U), and **in that** the second potting compound (V2), which is translucent, forms on the front side of the two legs (S1, S2) a three-part cap (K1, K2, K3) in such a way that the two cap parts (K1, K2) arranged on the end face of the legs (S1, S2) forms the filling edge for filling the first casting compound (V1), which is transparent, between the reflectors (R1, R2) and then the filling in second potting compound (V2) as the third cap part (K3) closes the lid, wherein the light-emitting diode strip is flexible in the extension direction.

3. Light-emitting diode strip according to claim 2, **characterized in that** the legs (S1, S2) and reflectors (R1, R2) are integral and that the reflectors (R1, R2) are each configured to each other as an inclined surface in an open V-shaped arrangement.

4. Light-emitting diode strip according to claim 1 or 2, **characterized in that** the plastic material of the housing (U) is enriched with heat-conducting fillers and is thermally conductive, that the conductor carrier (T) is heat-conducting and that the conductor carrier (T) is glued with adhesive tape on the base (UB) of the housing (U) or on the first leg (S1).

5. Light-emitting diode strip according to claim 2, **characterized in that** the cap parts (K1, K2) form a curved or oblique lateral surface between an overflow edge (UK) and an edge (RV1).

6. Light emitting diode strip according to claim 2, **characterized in that** the lateral surfaces of both legs (S1, S2) of the U-shaped housing (U) have a profiling (P).

7. Light-emitting diode strip according to claim 2, **characterized in that** the end faces of the two limbs (FS1, FS2) of the casting mold (F) either have a blunt end (E) or a profiling (PR) or both (E, PR).

8. Light-emitting diode strip according to claim 2, **characterized in that** both legs (S1, S2) of the U-shaped housing (U) have a lateral luminous edge (LK1, LK2).

9. Light-emitting diode strip according to claim 1, **characterized in that** the first leg (S1) has a groove (SIN) adjoining the end of the second potting compound (V2).

10. Light emitting diode strip according to claim 1, **characterized in that** the first leg (S1) has a step (ST), which serves for positioning as a stop for the flexible conductor carrier (T).

11. Light emitting diode strip according to one or more of claims 1 to 10, **characterized in that** the second leg (S2) has a blunt end opposite to the base (UB) of the housing (U).

12. Light emitting diode strip according to one or more of claims 1 to 11, **characterized in that** the light exit surface of the second potting compound (V2) has a three-dimensional formation (STR *) and that the three-dimensional formation (STR *) is designed as a font or three-dimensional contour.

13. Light-emitting diode strip according to one or more of claims 1 to 12, **characterized in that** the second potting compound (V2) is formed in cross-section as a triangular or as a semi-circular 90 ° with undercut or as a rectangular / square 270 ° or as a lens with undercut or as a rectangular with broadened radiation.

14. A method for producing a light-emitting diode strip according to claim 2, **wherein:**
a) a second potting compound (V2), which is liquid and translucent, is filled into a casting mold (F), that opens towards one side and that has a contour as legs (FS1, FS2) extending perpendicularly from that side (FS1, FS2) and as a trapezoidal strip (L) rising to the open end face, whereby is filled between the legs (FS1, FS2) and the inclined surface of the strip (L) of the casting mold (F),
b) that up to the filling edge of the casting mold (F) the plastic material of the housing (U) is filled such that the two legs (S1, S2) with integrally formed reflectors (R1, R2) and the base (UB) of the U-shaped housing (U) are configured, wherein the reflectors (R1, R2) reflect the light of the chip LEDs (LED) arranged on the base (UB),
c) the flexible conductor carrier (T) with the mounted chip light-emitting diodes (LED) is arranged on the base (UB) of the U-shaped housing (U),
d) the first potting compound (V1), which is transparent, is filled between the reflectors (R1, R2) and
e) the second potting compound (V2) is filled between the two cap parts (K1, K2) arranged on the front side of the legs (S1, S2), whereby as the third cap part (K3) this closes the lid.

15. A method for producing a light-emitting diode strip according to claim 1, **wherein:**
a) a second liquid translucent potting compound (V2) is filled into a casting mold (F), that opens towards one side and that has a contour as legs (FS1, FS2) extending perpendicularly from that side (FS1, FS2) and a filling edge (FR) rising up to the open end face in such a way that it forms a curved surface between the filling edge (FR) and an overflow edge (UK) of the casting mold (B),
b) the plastic material of the housing (U) is filled to the overflow edge (UK) of the mold (F) and thereby forms the first leg (S1) and the base (UB) of the U-shaped housing (U),
c) the flexible conductor support (T) with the assembled chip light-emitting diodes (LED) is inserted in the U-shaped housing (U) below a groove (SIN) of the first leg (S1) adjacent to the end of the second potting compound (V2),
d) the first potting compound (V1) is filled to the inner edge of the base (UB) and the opposite edge of the second potting compound (V2) and
e) the second leg (S2) of the U-shaped housing (U) is filled to the outer edge of the base (UB) and the opposite edge of the second potting compound (V2).

## Revendications

1. Une bande de diodes électroluminescentes avec un boîtier en forme de U (U), avec deux branches (S1, S2) et un socle (UB), avec des puce à diodes électroluminescentes (LED) montés sur un support de conducteur souple (T) et avec deux composé d'enrobage (V1, V2) disposées entre les deux branches (S1, S2) du boîtier (U), **caractérisé en ce qu'**au moins le première branche (S1) du boîtier en forme de U (U) est translucide, se rétrécissant dans l'épaisseur de paroi du second composé d'enrobage (V2) et passer dans la matière plastique du boîtier (U), et en que sur cette branche (S1) le conducteur souple (T) est disposé et incorporé dans le premier composé d'enrobage transparent (V1) et **en ce que** la lumière de la puce à diodes électroluminescentes (LED) émise est réfléchi par les surfaces internes du boîtier (U) et diffusé par le second composé d'enrobage (V2), la bande de diodes électroluminescentes étant flexible dans la direction d'extension.

2. Une bande de diodes électroluminescentes avec un boîtier en forme de U (U), avec deux branches (S1, S2) et un socle (UB), avec des puce à diodes électroluminescentes (LED) montés sur un support de conducteur souple (T) et avec deux composé d'enrobage (V1, V2) disposées entre les deux branches (S1, S2) du boîtier (U), les puces à diodes électroluminescentes (LED) sont disposées sur le socle (UB), **caractérisé en ce que** la bande de diodes électroluminescentes formée au moins deux réflecteurs (R1, R2) sur les branches (S1, S2), qui reflètent la lumière des puces à diodes électroluminescentes (LED) disposées sur la base (UB) du boîtier (U), et **en ce que** le deuxième composé d'enrobage (V2), qui est translucide, est situé sur la face avant des deux pieds (S1, S2) forme un capuchon en trois parties (K1, K2, K3) de telle sorte que les deux parties de capuchon (K1, K2) agencées sur la face d'extrémité des branches (S1, S2) recouvrent le bord de remplissage pour le remplissage du premier composé d'enrobage (V1), qui est transparent, entre les réflecteurs (R1, R2) et puis le deuxième composé d'enrobage (V2) est rempli en tant que troisième partie de capuchon (K3) ferme le couvercle, à condition que la bande de diodes électroluminescentes étant flexible dans la direction d'extension.

3. Bande de diode électroluminescente selon la revendication 2, **caractérisé en ce que** les branches (S1, S2) et les réflecteurs (R1, R2) sont solidaires et **en ce que** les réflecteurs (R1, R2) sont configurés chacun comme une surface inclinée dans un agencement en forme de V ouvert l'un à l'autre.

4. Bande de diode électroluminescente selon la revendication 1 ou 2, **caractérisé en ce que** la matière plastique du boîtier (U) est enrichie en charges thermoconductrices et par ci est thermoconductrice, **en ce que** le support de conducteur (T) est thermoconductrice et **en ce que** le support de conducteur (T) est muni avec de ruban adhésif au socle (UB) du boîtier (U) ou est collé sur le première branche (S1).

5. Bande de diode électroluminescente selon la revendication 2, **caractérisé en ce que** les parties de capuchon (K1, K2) situées entre un bord de débordement (ÜK) et un bord (RV1) forment une surface latérale incurvée ou oblique.

6. Bande de diode électroluminescente selon la revendication 2, **caractérisée en ce que** les surfaces latérales des deux branches (S1, S2) du boîtier en forme de U (U) présentent un profilage (P).

7. Bande de diode électroluminescente selon la revendication 2, **caractérisée en ce que** les faces d'extrémité des deux branches (FS1, FS2) du moule de coulée (F) présentent une extrémité émoussée (E) ou un profilage (PR) ou les deux (E, PR).

8. Bande de diode électroluminescente selon la revendication 2, **caractérisée en ce que** les deux branches (S1, S2) du boîtier en forme de U (U) présentent un bord latéral lumineux (LK1, LK2).

9. Bande de diode électroluminescente selon la revendication 1, **caractérisée en ce que** la première branche (S1) présente une gorge (SIN) adjacente à l'extrémité du deuxième composé d'enrobage (V2).

10. Bande de diodes électroluminescentes selon la revendication 1, **caractérisé en ce que** la première branche (S1) présente un décrochement (ST) servant de butée au butoir du support de conducteur souple (T).

11. Bande de diode électroluminescente selon une ou plusieurs des revendications 1 à 10, **caractérisée en ce que** la deuxième branche (S2) sur la base (UB) du boîtier (U) opposé à une extrémité émoussée.

12. Bande de diode électroluminescente selon une ou plusieurs des revendications 1 à 11, **caractérisée en ce que** la surface de sortie de lumière du second composé d'enrobage (V2) présente une forme tridimensionnelle (STR*) et **en ce que** la forme tridimensionnelle (STR*) est conçue comme une écriture ou un contour tridimensionnel.

13. Bande de diodes électroluminescentes selon une ou plusieurs des revendications 1 à 12, **caractérisée en ce que** le deuxième composé d'enrobage (V2) présente une section transversale triangulaire ou semi-circulaire à 90 ° avec dépouille ou en forme de lentille rectangulaire / carrée à 270 ° ou est en forme comme un rayonnement avec dépouille ou en forme rectangulaire avec large éclairage.

14. Un procédé de production d'une bande de diodes électroluminescentes selon la revendication 2, **dans lequel:**
a) un deuxième composé d'enrobage (V2), liquide et translucide, est remplie dans un moule de coulée (F) ouvert, ceci présentant un contour en forme de branches (FS1, FS2), s'étendant perpendiculairement à partir de ce côté et une bande trapézoïdale (L) allant jusqu'à la face d'extrémité ouverte, et est remplie entre les branches (FS1, FS2) et la surface inclinée de la bande (L) du moule de coulée (F),
b) jusqu'au bord de remplissage du moule de coulée (F) le matériau plastique du boîtier (U) est rempli de sorte que les deux branches (S1, S2) avec des réflecteurs formés de manière intégrée (R1, R2) et la base (UB) du boîtier en forme de U (U) soient configurées, dans lequel les réflecteurs (R1, R2) réfléchissent la lumière des diodes électroluminescentes à puce (LED) disposées sur la base (UB),
c) le support de conducteur flexible (T) avec les diodes électroluminescentes à puce (LED) est montées dans le boîtier en forme de U (U) sur la base (UB),
d) le premier composé d'enrobage (V1), qui est transparent, est rempli entre les réflecteurs (R1, R2) et
e) le deuxième composé d'enrobage (V2) est rempli entre les deux parties de capuchon (K1, K2) disposé sur le côté avant des branches (S1, S2), ce qui ferme le couvercle en tant que comme troisième partie de capuchon (K3).

15. Un procédé de production d'une bande de diodes électroluminescentes selon la revendication 1, **dans lequel:**
a) un deuxième composé d'enrobage liquide translucide (V2) est rempli dans un moule de coulée (F) ouvert, ce qui vers un côté dont le profil de contour à partir de ce côté s'étire les branches (FS1, FS2) et un bord de remplissage (FR) s'élevant jusqu'à la face d'extrémité ouverte de manière ce que forme une surface incurvée entre le bord de remplissage (FR) et un bord de débordement (ÜK) du moule de coulée (B),
b) la matière plastique du boîtier (U) est rempli jusqu'au bord de débordement (ÜK) du moule (F) et forme ainsi la première branche (S1) et la base (UB) du boîtier en forme de U (U),
c) le support de conducteur flexible (T) avec les diodes électroluminescentes à puce (LED) assemblée sont insérées dans le boîtier en forme de U (U) en dessous de l'extrémité du deuxième composé d'enrobage (V2) adjacent une rainure (SIN) de la première branche (S1),
d) du premier composé d'enrobage (V1) est rempli dans la rangée intérieure de la base (UB) et le bord opposé du second composé d'enrobage (V2) et
e) la seconde jambe (S2) du boîtier en forme de U (U) est rempli jusqu'au bord extérieur de la base (UB) et le bord opposé du deuxième composé d'enrobage (V2).
